# EUROPÄISCHE PATENTANMELDUNG

(11) **EP 4 309 850 A1**
(43) Veröffentlichungstag der Anmeldung: **24.01.2024**
(21) Anmeldenummer: 23185711.1
(22) Anmeldetag: 25.07.2014
(51) Int. Cl.: B25F 5/00, B23Q 3/12, B24B 23/04, B24B 45/00, B27B 19/00, B27B 5/30

(54) **HANDGEFÜHRTE WERKZEUGMASCHINE**

(30) Priorität: 01.08.2013 DE 202013006900 U
(62) Teilanmeldung aus: 14744284.2
(71) Anmelder: C. & E. Fein GmbH, 73529 Schwäbisch-Gmünd-Bargau (DE); Robert Bosch GmbH, 70442 Stuttgart (DE)
(72) Erfinder: Klabunde, Olaf, 89537 Giengen/Brenz (DE); Blickle, Jürgen, 73035 Göppingen (DE); Thomaschewski, Walter, 70794 Filderstadt (DE); Bek, Fabian, 73560 Böbingen (DE); Delfini, Stefano, 2544 Bettlach (CH); Fellmann, Willi, 4537 Wiedlisbach (CH); Lüscher, Bruno, 4800 Zofingen (CH); Bozic, Milan, 4500 Solothurn (CH); Mathys, Thomas, 3250 Lyss (CH); Grolimund, Daniel, 4528 Zuchwil (CH)
(74) Vertreter: Wallinger, Michael

(57) **Zusammenfassung**

Die Erfindung betrifft eine Werkzeugmaschine, insbesondere eine handgeführte Werkzeugmaschine, die eine um eine Abtriebsachse bewegbare, insbesondere oszillierend bewegbare, Werkzeugaufnahmeeinrichtung aufweist. Die Werkzeugaufnahmeeinrichtung ist dazu eingerichtet, eine Werkzeugeinrichtung derart an der Werkzeugmaschine zu halten, dass die Abtriebsachse und eine Werkzeug-Drehachse im Wesentlichen zusammenfallen.

Die Werkzeugaufnahmeeinrichtung weist wenigstens einen Drehmomentübertragungsbereich und eine Halteeinrichtung auf. Der Drehmomentübertragungsbereich weist zur Übertragung einer Antriebskraft auf die Werkzeugeinrichtung wenigstens zwei im Abstand zu dieser Abtriebsachse angeordnete Abtriebsflächenbereiche mit je einer Vielzahl von Flächenpunkten auf.

Dabei sind Tangentialebenen an diesen Flächenpunkten gegenüber einer Axialebene, welche diese Abtriebsachse einschließt, geneigt. Weiterhin sind die Tangentialebenen gegenüber einer Radialebene, welche sich senkrecht zu der Abtriebsachse erstreckt, geneigt.

Auf diese Weise wird das Abtriebsdrehmoment von der Werkzeugmaschine über die Werkzeugaufnahmeeinrichtung zuverlässig auf die Werkzeugeinrichtung übertragen.

## Beschreibung

Hiermit wird der gesamte Inhalt der Prioritätsanmeldung DE 20 2013 006 900.7 durch Bezugnahme Bestandteil der vorliegenden Anmeldung.

Die vorliegende Erfindung betrifft eine Werkzeugmaschine und insbesondere eine handgeführte Werkzeugmaschine, die eine sich um eine Abtriebsachse bewegende Werkzeugaufnahmeeinrichtung aufweist.

Die Erfindung wird nachfolgend vorwiegend am Beispiel einer insbesondere handgeführten Werkzeugmaschine beschrieben, die eine sich um eine Abtriebsachse dreh-oszillierend bewegende Werkzeugaufnahmeeinrichtung aufweist. Diese Einschränkung der Darstellung ist aber nicht als Einschränkung der Anwendungsmöglichkeiten einer solchen Werkzeugmaschine zu verstehen.

Statt des Begriffs "Werkzeugaufnahmeeinrichtung" wird im Folgenden - vereinfachend - auch der Begriff "Werkzeugaufnahme" verwendet. Auch dies soll aber nicht als Einschränkung zu verstehen sein.

Eine Werkzeugmaschine ist eine Vorrichtung, die einen oder mehrere Antriebsmotoren und ggf. eine oder mehrere Getriebeeinrichtungen sowie wenigstens eine Abtriebswelle mit einer - im geometrischen Sinn zu verstehenden Abtriebsachse - aufweist. An der Abtriebswelle ist mittelbar oder unmittelbar die Werkzeugaufnahmeeinrichtung angeordnet. Die Werkzeugaufnahmeeinrichtung ist das Bauteil bzw. sind die Bauteile, mit dem bzw. denen das Drehmoment auf das Werkzeug aufgebracht wird, wobei die Werkzeugaufnahmeeinrichtung das Werkzeug vorzugsweise, insbesondere bei einer handgeführten Werkzeugmaschine auch festhält, so dass das Werkzeug allein durch die Werkzeugaufnahmeeinrichtung sowohl festgehalten als auch mit dem Abtriebsdrehmoment beaufschlagt wird. Der Begriff Abtriebsmoment und die mit Abtrieb gebildeten Begriffe meinen das von der Werkzeugmaschine auf das Werkzeug übertragene Moment bzw. die entsprechenden Bauteile der Werkzeugmaschine, der Begriff Antriebsmoment bezeichnet das vom Werkzeug aufgenommene Moment.

Eine handgeführte Werkzeugmaschine weist eine Trageeinrichtung, insbesondere Griffe und dergleichen auf, mit denen die Werkzeugmaschine mit dem daran befestigten Werkzeug von einer Bedienungskraft geführt werden kann. Typischerweise sind handgeführte Werkzeugmaschinen mit einem elektrischen Antriebsmotor versehen, es sind aber auch andere Bauarten, wie z. B. hydraulisch oder pneumatisch betriebene Werkzeugmaschinen bekannt und im Rahmen der Erfindung verwendbar.

Im Stand der Technik ist eine Vielzahl von Werkzeugen oder Werkzeugeinrichtungen bekannt, die dafür vorgesehen sind, mit einer Werkzeugmaschine verwendet zu werden, die eine umlaufende Werkzeugaufnahmeeinrichtung aufweist. Derartige Werkzeuge sind z. B. Bohrer, Schleif- und Trennscheiben, Kreissägen, etc. Diese Werkzeuge sind an der Werkzeugaufnahmeeinrichtung befestigt, die sich - je nach Einsatz, Werkzeug und Maschine - mit einer Drehzahl zwischen nahe 0 bis zu einigen 1000 Umdrehungen/min., in Extremfällen aber auch deutlich höher, dreht. Das Werkzeug wird beim Betrieb mit mehr oder weniger hohem Anpressdruck in Kontakt mit einem Werkstück gebracht, an dem es dann den entsprechenden Bearbeitungsvorgang ausführt. Die dabei im Abstand zur Drehachse auftretenden Bearbeitungskräfte, also beispielsweise Schnitt- oder Schleifkräfte, führen zu einem Drehmoment um die Abtriebsachse, welches durch das von der Werkzeugmaschine auf die Werkzeugeinrichtung übertragende Abtriebsmoment ausgeglichen wird. Die Übertragung dieses Abtriebsmoments auf das Werkzeug erfolgt über die Anschlusseinrichtung des Werkzeugs, mit der dieses an der Werkzeugaufnahmeeinrichtung befestigt ist. Bei einem Werkzeug, welches bei der Bearbeitung im Wesentlichen immer in gleicher Richtung rotiert, treten somit die während des Werkzeugeinsatzes auf die Werkzeugaufnahmeeinrichtung wirkenden Kräfte im Wesentlichen in gleicher Richtung auf, sind aber in der Höhe unterschiedlich.

Im Stand der Technik sind ferner Werkzeugmaschinen mit dreh-oszillierender Werkzeugaufnahmeeinrichtung bekannt. Unter einer Werkzeugmaschine mit oszillierender bzw. dreh-oszillierender Werkzeugaufnahmeeinrichtung wird hier eine Werkzeugmaschine mit einer Bewegung der Werkzeugaufnahmeeinrichtung verstanden, bei der die Werkzeugaufnahmeeinrichtung sich ausgehend von einer Mittellage in einer ersten Drehrichtung bewegt, zum Stillstand abgebremst wird und sich dann in umgekehrter Drehrichtung wieder bis zum Stillstand bewegt.

Der Winkelabstand von der Mittellage zur jeweiligen Endlage kann typischerweise bis zu 5° betragen, üblich sind allerdings bei ausgeführten Maschinen meist geringere Winkel von 1° bis 2,5°, was einer Gesamtwinkelbewegung (1. - 2. Endlage) von 2° bis 5° entspricht. Diese Oszillationsbewegung wird typischerweise zwischen 5.000 und 50.000 mal pro Minute ausgeführt, es sind allerdings geringere und auch höhere Oszillationsfrequenzen (hier ausgedrückt als Schwingungen/min.) möglich.

Unter einem dreh-oszillierenden Antrieb der Werkzeugaufnahmeeinrichtung, so wie dieser vorliegend diskutiert wird, ist insbesondere kein hub-oszillierender Antrieb, wie dieser insbesondere von Hubsägeeinrichtungen bekannt ist, zu verstehen. Unter einer Hubsägeeinrichtung ist insbesondere eine Stichsäge-, Säbelsäge- oder Fuchsschwanzsägeeinrichtung oder dergleichen zu verstehen.

Die Umkehr der Drehrichtung bewirkt, dass auch die Bearbeitungskräfte des Werkzeugs, die bekanntlich immer entgegen der Bewegungsrichtung bzw. hier entgegen der Drehrichtung, wirken, ebenfalls ihre Richtung ändern. Aus den ihre Richtung wechselnden Bearbeitungskräften ergibt sich entsprechend dem Hebelarm, d.h. dem Abstand des Bearbeitungspunktes des Werkzeugs zur Drehachse, ein Drehmoment, das mit der Oszillation die Richtung umkehrt. Dem aus den Bearbeitungskräften herrührenden Drehmoment überlagert sich ein weiteres Moment, das sowohl während der Bearbeitung aber auch im Leerlauf wirksam ist, nämlich das aus dem Massenträgheitsmoment des Werkzeugs herrührende Drehmoment zum Abbremsen des Werkzeugs nach seiner höchsten Geschwindigkeit (z. B. dem jeweiligen Amplitudenmaximum der Sinuskurve bei einer sinusförmigen Drehgeschwindigkeitsänderung der Werkzeugaufnahmeeinrichtung) und der nach der Drehrichtungsumkehr erfolgenden erneuten Beschleunigung des Werkzeugs in die Gegenrichtung.

Die Drehmomente, die durch die Bearbeitungskräfte und durch die kinematischen Gegebenheiten des Oszillationsantriebs entstehen, werden von der Werkzeugmaschine aufgebracht und über die Werkzeugaufnahmeeinrichtung in die Werkzeugeinrichtung eingeleitet.

Der vorliegenden Erfindung liegt die Aufgabe zugrunde, die Werkzeugmaschine so zu gestalten, dass das Abtriebsdrehmoment über die Werkzeugaufnahmeeinrichtung zuverlässig übertragen werden kann.

Diese Aufgabe wird durch den Gegenstand des Anspruchs 1 gelöst.

Zu bevorzugende Weiterbildungen der Erfindung sind Gegenstand der Unteransprüche.

Gegenstand der Erfindung ist weiterhin ein Bearbeitungssystem beziehungsweise ein Werkzeugmaschinensystem, welches eine Werkzeugmaschine gemäß Anspruch 1 oder einem der Unteransprüche und eine Werkzeugeinrichtung aufweist.

Erfindungsgemäß weist eine Werkzeugmaschine eine Werkzeugaufnahmeeinrichtung auf, mit der die Werkzeugeinrichtung so an die Werkzeugmaschine befestigt werden kann, dass deren Abtriebsachse und eine Werkzeug-Drehachse im Wesentlichen zusammenfallen. Der Begriff "Abtriebsachse" und "Werkzeug-Drehachse" bezeichnet dabei die geometrische Drehachse der Werkzeugmaschine bzw. der Werkzeugeinrichtung.

Die erfindungsgemäße Werkzeugmaschine weist eine Werkzeugaufnahmeeinrichtung auf, die dazu eingerichtet ist, eine Werkzeugeinrichtung derart an der Werkzeugmaschine zu halten, dass die Abtriebsachse und eine Werkzeug-Drehachse im Wesentlichen zusammenfallen.

Die Werkzeugaufnahmeeinrichtung kann dazu fest mit der Werkzeugmaschine verbunden sein, die Werkzeugaufnahmeeinrichtung kann aber auch lösbar an einer Abtriebswelle, Abtriebsspindel oder dergleichen befestigt sein.

Die Werkzeugaufnahmeeinrichtung weist einen Drehmomentübertragungsbereich und eine Halteeinrichtung auf. Der Drehmomentübertragungsbereich ist dafür vorgesehen, das Antriebsdrehmoment der Werkzeugmaschine auf eine Werkzeugeinrichtung zu übertragen. Umgekehrt ist der Drehmomentübertragungsbereich auch dafür vorgesehen, ein Drehmoment, insbesondere ein beim Abbremsen der Werkzeugbewegung entstehendes Bremsmoment von der Werkzeugeinrichtung auf die Werkzeugmaschine zu übertragen.

Die Werkzeugaufnahmeeinrichtung weist weiterhin eine Halteeinrichtung auf, die dafür vorgesehen ist, das Werkzeug während des Betriebes festzuhalten. Dabei muss die Halteeinrichtung so gestaltet sein, dass sowohl die im Leerlauf, als auch die bei der Bearbeitung entstehenden Kräfte zwischen Werkzeugaufnahmeeinrichtung und der Werkzeugeinrichtung zuverlässig aufgenommen werden können. Insbesondere ist die Halteeinrichtung vorzugsweise so gestaltet, dass sie sowohl Kräfte, die von der Werkzeugeinrichtung auf die Werkzeugmaschine in Richtung der Werkzeugmaschine ausgeübt werden, und die Kräfte die von der Werkzeugeinrichtung in Richtung von der Werkzeugmaschine weg ausgeübt werden, jeweils zuverlässig aufgenommen werden. Wie später noch im Einzelnen ausgeführt werden wird, ist die Halteeinrichtung vorzugsweise so gestaltet, dass sie zwar ungewolltes Lösen der Werkzeugeinrichtung von der Werkzeugaufnahmeeinrichtung verhindert, andererseits aber ein einfacher Wechsel der Werkzeugeinrichtung möglich ist.

Der Drehmomentübertragungsbereich und die Halteeinrichtung können auch als eine gemeinsame Einrichtung oder als gemeinsames Bauteil ausgestaltet sein.

Der Drehmomentübertragungsbereich weist wenigstens zwei im Abstand zu dieser Werkzeug-Drehachse angeordnete Abtriebsflächenbereiche auf, die jeweils eine Vielzahl von Flächenpunkten aufweisen. Der Begriff "Abtriebsflächenbereich" (im Folgenden teilweise auch nur als "Abtriebsfläche" bezeichnet) bezeichnet eine Fläche, die zumindest teilweise mittelbar oder unmittelbar in Kontakt mit der Werkzeugeinrichtung steht, um das Abtriebsdrehmoment auf die Werkzeugeinrichtung zu übertragen. Der Begriff "Flächenpunkt" meint dabei Punkte auf der Oberseite dieser Abtriebsflächen und ist geometrisch zu verstehen.

Der Begriff wird verwendet, um den geometrischen Punkt zu charakterisieren, an welchem eine Tangentialebene an einer Fläche anliegt. Der Vektor auf dem Flächenpunkt senkrecht zur Tangentialebene beschreibt die Orientierung der Fläche in diesem Punkt in einen Raum, der z.B. durch ein dreidimensionales Koordinatensystem oder durch andere Bezugsebenen oder Bezugsflächen definiert ist.

Eine Fläche hat unendlich viele Flächenpunkte, da jeder Punkt der Fläche gleichzeitig auch ein Flächenpunkt im vorliegenden Sinne ist. Um eine einsinnig oder mehrsinnig gekrümmte Fläche für die Praxis zu beschreiben, genügt jedoch eine endliche Anzahl von Flächenpunkten. Unter dem Begriff einsinnig gekrümmt ist eine an jedem Punkt nur in eine Richtung gekrümmte Fläche, z.B. eine zylindrische Fläche, zu verstehen, unter dem Begriff mehrsinnig gekrümmt eine an wenigstens einem Punkt in mehrere Richtungen gekrümmte Fläche, z.B. eine Kugeloberfläche.

Eine ebene Fläche hat nur eine Tangentialebene, die mit der Fläche selbst zusammenfällt. Zur Charakterisierung einer ebenen Fläche genügt somit ein einzelner Flächenpunkt, wobei dies jeder beliebige Punkt der ebenen Fläche sein kann.

Da Flächenpunkte geometrische Punkte sind, sind sie auf der Fläche nicht sichtbar.

Für die Tangentialebenen an diesen Flächenpunkten gelten besondere geometrische Bedingungen. Tangentialebenen sind, wie in der Geometrie allgemein üblich, die Ebenen, die senkrecht zu den Normalvektoren der Flächenpunkte ausgebildet sind und die Oberfläche im Flächenpunkt berühren. Dabei meint der Begriff "Normalvektor" einen Vektor, der in diesem Flächenpunkt exakt senkrecht zur Fläche ausgerichtet ist.

Die Tangentialebenen in diesen Flächenpunkten sind in zwei Richtungen geneigt. Zum einen sind die Tangentialebenen gegenüber einer Axialebene geneigt, welche die Abtriebsachse einschließt. Ferner sind diese Tangentialebenen gegenüber einer Radialebene, welche sich senkrecht zur Abtriebsachse erstreckt, geneigt.

Damit unterscheidet sich die Anordnung dieser Abtriebsflächen gegenüber den im Stand der Technik bekannten Werkzeugaufnahmeeinrichtungen für Oszillationsmaschinen.

Bei den bekannten Werkzeugeinrichtungen, wie sie beispielsweise in den deutschen Patentanmeldungen DE 10 2011 005 818 A1 und DE 296 05 728 U1 dargestellt sind, sind die Werkzeuge im Verbindungsbereich zur Werkzeugaufnahmeeinrichtung der Werkzeugmaschine im Wesentlichen eben gestaltet, d.h. sie erstrecken sich in diesem Bereich in einer Ebene, die senkrecht zur Abtriebsachse angeordnet ist. Die Abtriebsflächen sind bei derartigen Werkzeugmaschinen senkrecht zur Radialebene und parallel zur Ebene der Abtriebsachse ausgerichtet.

Es sei bereits jetzt angemerkt, dass bei einer bevorzugten Ausführungsform die Abtriebsfläche im Wesentlichen eben ist, d.h. dass die Normalvektoren aller Flächenpunkte parallel zueinander ausgerichtet sind und somit die Abtriebsfläche insgesamt nur eine einzelne Tangentialebene aufweist. Es ist aber im Rahmen der Erfindung ebenfalls möglich, dass die Abtriebsflächen einsinnig oder zweisinnig gekrümmt sind; in diesem Fall sind dann die Normalvektoren nicht mehr parallel zueinander.

Der Erfindung liegen folgende Überlegungen zugrunde:
Durch die oszillierende Bewegung unterliegt sowohl die Werkzeugaufnahmeeinrichtung als auch der Bereich des Werkzeugs, in dem das Drehmoment eingeleitet wird, einer Biege-Wechsel-Beanspruchung. Diese sind bei metallischen Werkstoffen, aus denen die hier in Rede stehenden Werkzeugaufnahmeeinrichtungen und Werkzeuge üblicherweise gefertigt werden, besonders problematisch. Metalle weisen ein Kristallgefüge auf. Kommt es in einem Bereich eines metallischen Bauteils zu örtlichen Überlastungen, d.h. dass die im Bauteil wirkenden Spannungen an dieser Stelle höher sind als die vom Bauteil ertragbaren Spannungen, so entstehen zwischen den einzelnen Körnern des Metallgefüges Mikrorisse. Diese beeinträchtigen die Festigkeit des Bauteils in doppelter Hinsicht. Zum einen können in dem Bereich, in dem Mikrorisse entstanden sind, keine Spannungen im Bauteil übertragen werden. Dies bedeutet, dass durch die Rissbildung die Belastungen innerhalb dieses Bereiches erhöht werden, da sich die wirksame Fläche zur Kraftübertragung vermindert.

Zum anderen entsteht ein Phänomen, das im Maschinenbau üblicherweise als "Kerbwirkung" bezeichnet wird. Die Bezeichnung rührt daher, da im Bereich einer Kerbe, insbesondere wenn die Kerbe scharfkantig ist, eine örtliche Spannungskonzentration entsteht, die im Bereich des die Kerbe umgebenden Werkstoffes zu Schubspannungen führt, die höher sind, als die Schubspannungen in den Bereichen des Bauteils, die nicht durch eine solche Geometrie beeinflusst werden.

Diese erhöhten Belastungen führen dazu, dass die Rissbildung fortschreitet und schließlich zu einem Versagen des Bauteils führt.

Dieser Vorgang, der beispielsweise in den Arbeiten von Palmgren und Miner dokumentiert ist, wird als Schadensakkumulation bezeichnet.

Die Eigenschaft eines Werkstoffes bzw. eines Bauteils, schwingende Belastungen und insbesondere Biege-Wechsel-Belastungen zu ertragen, wird üblicherweise durch die sogenannte Wöhlerlinie dieses Bauteils dargestellt. Der Wöhler-Linie liegt die Erkenntnis zugrunde, dass eine wechselnde Belastung, beim Wöhler-Versuch wird vom Lastwechsel gesprochen, insbesondere von einem aus Stahl bestehenden Bauteil in vielen Fällen dann auf Dauer ertragen werden kann, wenn das Bauteil zwischen 2 Mio. und 6 Mio. (abhängig vom Werkstoff) derartige Lastwechsel bei dieser Belastung ohne Schädigung übersteht. Im Maschinenbau spricht man dann von der sogenannten Dauerfestigkeit des Werkstoffs bzw. des Bauteils.

Ein oszillierend angetriebenes Werkzeug schwingt, wie vorstehend ausgeführt, z. B. mit einer Frequenz von 20.000 Schwingungen/min. Dies bedeutet in der Diktion der betriebsfesten Bauteilgestaltung 20.000 Lastwechsel/min. oder 1,2 Mio. Lastwechsel/h..

Die untere Dauerfestigkeitsgrenze des Wöhler-Versuchs von 2 Mio. Lastwechseln wird also schon nach 2 Stunden Betriebszeit der Werkzeugmaschine bzw. des Werkzeugs überschritten.

Durch die erfindungsgemäße Gestaltung wird die Drehmomentbelastung, die die Werkzeugaufnahmeeinrichtung und das Werkzeug ertragen kann, erhöht. Dies wird zunächst dadurch erreicht, dass die Abtriebsflächen im Abstand zur Drehachse angeordnet sind. Da sich die vom Werkzeug aufzunehmende Kraft als Quotient aus Drehmoment und Abstand bestimmt (Fᵣ = M/r, M als Drehmoment gemessen in Nm, F als Kraft an der Stelle r in N und r der Abstand des Kraftangriffspunktes von der Abtriebsachse in m).

Eine Vergrößerung des Kraftangriffspunktes nach außen, d.h. von der Abtriebsachse bzw. der Werkzeug-Drehachse weg, reduziert das Drehmoment.

Die Neigung der Abtriebsflächen führt weiterhin dazu, dass der Kraftangriffspunkt insgesamt vergrößert wird, wodurch die örtliche Belastung sinkt und, bei entsprechender Gestaltung, die Krafteinleitung in die übrigen Bereiche der Werkzeugaufnahmeeinrichtung und des Werkzeuges verbessert wird.

Ein Teil der bei Oszillationsmaschinen üblicherweise verwendbaren Werkzeugeinrichtungen hat beispielsweise einen Arbeitsbereich, der in Umfangsrichtung angeordnet ist, wie beispielsweise Säge- und Schneidwerkzeuge. Der Arbeitsbereich dieser Werkzeuge erstreckt sich also im Wesentlichen in einer Ebene senkrecht zur Drehachse des Werkzeugs.

Bei derartigen Werkzeugen ist es im Stand der Technik üblich, dass der Anschlussbereich ebenfalls eben ausgeführt ist. Das Antriebsmoment wird dann als Kraft in einer Richtung senkrecht zur Werkzeugebene, z. B. durch Stifte, einen Antriebsstern oder dergleichen eingeleitet. In der Werkzeugebene ist das Werkzeug aber besonders steif, so dass die Krafteinleitung nur über einen relativ kleinen Bereich erfolgt. In diesem Bereich kann es dann zu höheren örtlichen Belastungen kommen, die zu einer Reduzierung der Betriebsfestigkeit des Werkzeugs führen.

Gemäß der vorliegenden Erfindung erfolgt bei einem solchen Werkzeug die Kraftübertragung zunächst von der geneigten Fläche in die ebene Fläche, wodurch sich - bei entsprechender Gestaltung - die Kraftübertragungsfläche erhöht und dadurch die örtliche Belastung vermindert.

Es sei an dieser Stelle angemerkt, dass es gerade darauf ankommt, die Spitzenbelastungen zu reduzieren. Da der Verschleiß bis hin zur Zerstörung des Werkzeugs gerade durch die vorstehend beschriebenen Belastungskonzentrationen, die zu Mikrorissen führen, entsteht und weiter begünstigt wird, lässt sich durch eine Reduzierung dieser Spitzenbelastungen eine erhebliche Verlängerung der Lebensdauer des Werkzeugs und der Werkzeugaufnahmeeinrichtung erreichen.

Gemäß einer bevorzugten Ausführungsform gibt es wenigstens einen Abtriebsflächenbereich, für den an keinem Flächenpunkt der Normalvektor an diesem Flächenpunkt auf einer Geraden liegt, die durch die Abtriebsachse verläuft. Ein solcher Abtriebsflächenbereich ist also an keinem Flächenpunkt zur Abtriebsachse hin orientiert, sondern der Abtriebsflächenbereich ist gegenüber der Abtriebsachse "verdreht".

Wie bereits ausgeführt, sind die Abtriebsflächen vorzugsweise im Wesentlichen eben gestaltet. Dies bedeutet, dass die Abtriebsflächen einen ebenen Bereich mit im Wesentlichen gleicher Tangentialebene haben, die aber durch Kanten, einseitig oder mehrseitige gekrümmte Flächen, etc. begrenzt sein können bzw. über Kanten oder über gewölbte Bereiche in andere Bereiche der Werkzeugaufnahmeeinrichtung, insbesondere des Drehmomentübertragungsbereichs, übergehen können.

Der Vorteil der ebenen Abtriebsflächen liegt darin, dass dadurch eine Werkzeugaufnahmeeinrichtung und eine Werkzeugeinrichtung geschaffen werden kann, die einerseits sowohl spielfrei an der Werkzeugaufnahmeeinrichtung der Werkzeugmaschine befestigt ist - wenn diese entsprechend gestaltet ist - und bei denen bei entsprechenden Toleranzen und Werkstoffeigenschaften wie Elastizität, etc. eine Flächenberührung zwischen der Werkzeugaufnahmeeinrichtung der Werkzeugmaschine und der Werkzeugeinrichtung möglich ist, wodurch sich der Bereich der Kraftübertragung erhöht.

Gemäß einer weiteren bevorzugten Ausführungsform sind die Abtriebsflächen wenigstens abschnittsweise gekrümmt. Dabei kann die Krümmung sowohl einsinnig als auch zweisinnig, konvex, konkav mit festen oder variablen Krümmungsradius ausgeführt sein.

Die gekrümmten Flächen können auch so gestaltet sein, dass sie durch ihre Formgebung und die Elastizität des Werkstoffes einer Elastizität unterworfen sind, durch die sich die Krümmung ändert und insbesondere durch die die Krümmung ab einer bestimmten Belastung im Wesentlichen verschwindet, d.h. also dann eine im Wesentlichen ebene Abtriebsfläche gegeben ist. Weiter vorzugsweise passen sich diese Abtriebsflächen der Werkzeugmaschine und die entsprechenden Gegenbereiche an der Werkzeugeinrichtung aneinander an.

In einer bevorzugten Ausführungsform weist die Werkzeugmaschine, insbesondere die Werkzeugaufnahmeeinrichtung, im Bereich des Drehmomentübertragungsbereichs wenigstens eine erste obere Begrenzungsebene und wenigstens eine zweite untere Begrenzungsebene auf. Dabei sind diese Begrenzungsebenen im Wesentlichen senkrecht zu dieser Abtriebsachse angeordnet. Weiter vorzugsweise sind diese beiden Begrenzungsebenen voneinander beabstandet. Bevorzugt ist jeder dieser Abtriebsflächenbereiche zwischen einer dieser ersten oberen und einer dieser zweiten unteren Begrenzungsebenen angeordnet, und zwar vorzugsweise so, dass der Abtriebsflächenbereich die jeweilige Begrenzungsebene berührt, aber nicht schneidet. Insbesondere durch die Anordnung wenigstens eines Abtriebsflächenbereichs zwischen diesen Begrenzungsebenen ist ein besonders großflächiger Abtriebsflächenbereich erreichbar und die Beanspruchung dieses Abtriebsflächenbereichs ist dementsprechend gering. Vorzugsweise ist eine erste Gruppe von Abtriebsflächenbereichen, wenigstens aber ein Abtriebsflächenbereich, zwischen einer dieser ersten oberen Begrenzungsebenen und einer dieser zweiten unteren Begrenzungsebenen angeordnet und weiter vorzugsweise ist eine zweite Gruppe von Abtriebsflächenbereichen zwischen einer weiteren ersten oberen und einer weiteren zweiten unteren Begrenzungsebene angeordnet. Insbesondere durch die Gruppierung von mehreren Abtriebsflächenbereichen und Zuordnung dieser zu Begrenzungsebenen ist einerseits eine einfache Fertigung des Drehmomentübertragungsbereichs ermöglicht und andererseits eine besonders homogene Antriebskrafteinleitung in die Werkzeugeinrichtung erreichbar.

In einer bevorzugten Ausführungsform erstreckt sich eine Vielzahl von Abtriebsflächenbereichen zwischen einer einzigen ersten oberen und einer einzigen zweiten unteren Begrenzungsebene. Weiter vorzugsweise erstrecken sich alle diese Abtriebsflächenbereiche zwischen einer einzigen ersten oberen und einer einzigen zweiten unteren Begrenzungsebene. Insbesondere durch die Erstreckung dieser Abtriebsflächenbereiche zwischen einer einzigen ersten oberen und einer einzigen zweiten unteren Begrenzungsebene ist ein Drehmomentübertragungsbereich mit geringem Bauraumbedarf und darüber hinaus mit geringem notwendigen Materialeinsatz erreichbar. Weiter vorteilhaft ist es, insbesondere durch diese Art der Gestaltung der Abtriebsflächenbereiche, ermöglicht, die Antriebskräfte besonders gleichmäßig und damit materialschonend auf die Werkzeugeinrichtung zu übertragen, insbesondere dadurch wird der Drehmomentübertragungsbereich entlastet und eine lange Lebensdauer ist erreichbar.

In einer bevorzugten Ausführungsform weist der Drehmomentübertragungsbereich eine Vielzahl von Abtriebsflächenbereichen auf. Vorzugsweise ist diese Vielzahl von Abtriebsflächenbereichen rotationssymmetrisch um die Abtriebsachse angeordnet.

"Rotationssymmetrisch um die Abtriebsachse" im Sinne der vorliegenden Anmeldung soll bedeuten, dass die Vielzahl von Abtriebsflächenbereichen durch Drehung um die Abtriebsachse um wenigstens einen Winkel, der größer als 0° und kleiner als 360° ist, - oder auch um jeden beliebigen Winkel - geometrisch gesehen in sich selbst übergeht. Insbesondere beträgt einer dieser Winkel 360° / *n,* wobei n eine natürliche Zahl größer 1 ist.

Insbesondere durch eine rotationssymmetrische Anordnung der Abtriebsflächenbereiche ist es ermöglicht, Zusatzbeanspruchungen auf den Drehmomentübertragungsbereich zu verringern bzw. die Abtriebsflächenbereiche gleichmäßig zu beanspruchen und damit insbesondere eine erhöhte Lebensdauer zu erreichen.

In einer bevorzugten Ausführungsform sind wenigstens jeweils zwei dieser Abtriebsflächenbereiche symmetrisch zu einer Symmetrieebene angeordnet. Vorzugsweise fällt diese Symmetrieebne mit einer dieser Axialebenen zusammen. Vorzugsweise sind mehr als zwei dieser Abtriebsflächenbereiche symmetrisch zu einer Symmetrieebene angeordnet, bevorzugt vier. Dabei liegt in dieser Symmetrieebene insbesondere die Abtriebsachse. Weiter vorzugsweise sind diese Abtriebsflächenbereiche im Wesentlichen aneinanderstoßend angeordnet. Dabei ist unter einer aneinanderstoßenden Anordnung im Sinne der Erfindung insbesondere auch eine solche Anordnung zu verstehen, wenn die Abtriebsflächenbereiche durch einen Übergangsbereich miteinander verbunden sind. Vorzugsweise kann ein solcher Übergangsbereich durch einen gekrümmt oder einen wenigstens abschnittsweise eben verlaufenden Flächenbereich gebildet sein. Weiter vorzugsweise schließt sich ein solcher Übergangsbereich an wenigstens einen, bevorzugt an beide dieser Abtriebsflächenbereiche, tangential an. Insbesondere durch eine symmetrische und auch aneinanderstoßende Anordnung der Abtriebsflächenbereiche ist eine besonders hohe Stabilität des Drehmomentübertragungsbereichs und damit eine gute Kraftübertragung auf die Werkzeugeinrichtung erreichbar.

In einer bevorzugten Ausführungsform weist der Drehmomentübertragungsbereich der Werkzeugmaschine eine Seitenwandung auf. Vorzugsweise verläuft diese Seitenwandung radial beabstandet von der Abtriebsachse. Weiter vorzugsweise erstreckt sich diese Seitenwandung zwischen der ersten oberen und der zweiten unteren Begrenzungsebene und weist bevorzugt eine in Richtung der Abtriebsachse veränderliche Wandstärke auf, besonders bevorzugt eine im Wesentlichen linear zunehmende Wandstärke in Richtung auf die Werkzeugmaschine hin. Bevorzugt weist diese Seitenwandung diese Abtriebsflächenbereiche auf. Insbesondere durch die Gestaltung des Drehmomentübertragungsbereichs mit einer Seitenwandung entsteht eine im Wesentlichen hohlkegelige Ausnehmung im Bereich des Drehmomentübertragungsbereichs, jedoch weist diese hohlkegelige Ausnehmung keinen kreisrunden Querschnitt auf, sondern einen Querschnitt mit variablen Abstand der Seitenwandung zur Abtriebsachse in einer zu dieser Abtriebsachse orthogonalen Ebene. Insbesondere durch die beschriebene Art der Ausgestaltung des Drehmomentübertragungsbereichs ist ein besonders stabiler Drehmomentübertragungsbereich und damit eine gute Drehmomenteinleitung in die Werkzeugeinrichtung erreichbar.

In einer bevorzugten Ausführungsform läuft diese Seitenwandung im Wesentlichen radial geschlossen um die Abtriebsachse um. In einer weiteren Ausführungsform weist die Seitenwandung in ihrem Verlauf um die Abtriebsachse Ausnehmungen bzw. Unterbrechungen auf. Insbesondere durch eine geschlossen umlaufende Seitenwandung ist ein besonders stabiler Drehmomentübertragungsbereich erreichbar; durch eine unterbrochene oder Ausnehmungen aufweisende Seitenwandung ist insbesondere ein besonders leichter und ein geringes Trägheitsmoment aufweisender Drehmomentübertragungsbereich erreichbar.

In einer bevorzugten Ausführungsform ist einer der Normalvektoren, auf eine dieser Tangentialebenen, in radialer Richtung von der Abtriebsachse weg orientiert. Es wird darauf hingewiesen, dass im Rahmen dieser Erläuterungen die Begriffe Normale und Normalvektor gleichbedeutend verwendet werden. Vorzugsweise sind die Normalvektoren mehrerer, bevorzugt aller, dieser Tangentialebenen in radialer Richtung von der Abtriebsachse weg orientiert. Insbesondere durch diese Orientierung der Tangentialebene stellt der Drehmomentübertragungsbereich im Vergleich mit einer herkömmlichen Welle-Nabe-Verbindung das Wellenteil dar. Diese Gestaltung des Drehmomentübertragungsbereichs bietet insbesondere die Möglichkeit einer einfachen Fertigung bzw. sind die Antriebskräfte von der Werkzeugmaschine auf die Werkzeugeinrichtung besonders gleichmäßig übertragbar.

In einer weiteren bevorzugten Ausführungsform ist einer der Normalvektoren auf eine dieser Tangentialebenen in radialer Richtung zu der Abtriebsachse hin orientiert. Vorzugsweise sind die Normalvektoren mehrerer, bevorzugt aller, dieser Tangentialebenen in radialer Richtung zu der Abtriebsachse hin orientiert. Insbesondere durch diese Orientierung der Tangentialebenen stellt der Drehmomentübertragungsbereich im Vergleich mit einer herkömmlichen Welle-Nabe-Verbindung das Nabenteil dar, anders gesprochen weist der Drehmomentübertragungsbereich insbesondere, wenigstens abschnittsweise, eine Ausnehmung auf. Bei einer derartigen Gestaltung des Drehmomentübertragungsbereichs werden die Kräfte von der Werkzeugmaschine auf die Werkzeugeinrichtung insbesondere durch innenliegende Flächen (Nabenteil) übertragen, insbesondere derartige Flächen sind gut vor Verschmutzung und Beschädigung geschützt.

In einer bevorzugten Ausführungsform ist zwischen einer dieser Tangentialebenen und dieser Radialebene, wobei diese Radialebene senkrecht zur Abtriebsachse angeordnet ist, der Winkel α eingeschlossen. Vorzugsweise ist der Winkel α aus einem bestimmten Bereich ausgewählt, wobei der Winkel α vorzugsweise kleiner ist als 90°, bevorzugt kleiner ist als 80° und besonders bevorzugt kleiner ist als 75°, weiter vorzugsweise ist der Winkel α größer als 0°, bevorzugt größer als 45° und besonders bevorzugt größer als 60°. Weiter vorzugsweise liegt der Winkel α in einem Bereich zwischen 62,5° und 72,5°. Vorzugsweise wird der Winkel α aufgrund der Bauteileigenschaften (insbesondere Geometrie, Wandstärke, E-Modul, Festigkeit und dergleichen) des Drehmomentübertragungsbereichs und/oder der Werkzeugeinrichtung und/oder bevorzugt aufgrund der auftretenden Kräfte, in den zuvor genannten Bereichen, gewählt. Insbesondere durch die zuvor beschriebene Auswahl des Winkels α aus dem genannten Bereich ist einerseits ein stabiler Drehmomentübertragungsbereich und andererseits eine gleichmäßige Einleitung der Antriebskräfte in die Werkzeugeinrichtung erreichbar. Es ist in der Regel zu bevorzugen, den Winkel α kleiner als 70° zu wählen, da dann die Gefahr des Verklemmens geringer ist. Dabei ist der Begriff "Verklemmen" derart aufzufassen, dass die Werkzeugeinrichtung nicht planmäßig aus der Werkzeugmaschine entfernbar ist, also insbesondere nicht ohne zusätzliche Krafteinwirkung. Diesem "Verklemmen" ähnliche Effekte sind in der Mechanik insbesondere als Selbsthemmung bekannt. Vorteilhaft führt ein aus dem genannten Bereich (α >= 70°) gewählter Winkel α zu einem besonders geringen Bauraumbedarf. Weiter vorteilhaft kann durch kleinere Winkel α (α < 70°) diese Neigung zum Verklemmen der Werkzeugeinrichtung in diesem Drehmomentübertragungsbereich verringert werden. Als besonders bevorzugter Bereich für den Winkel α hat sich der Bereich um 60° (+/-5°) gezeigt, da hierdurch ein relativ geringer Bauraumbedarf erreichbar ist und ein ungewolltes Verklemmen der Werkzeugeinrichtung verringert oder vermieden werden kann.

In einer bevorzugten Ausführungsform ist zwischen einer dieser Tangentialebenen und dieser Axialebene, wobei in dieser Axialebene die Abtriebsachse liegt, der Winkel β eingeschlossen. Vorzugsweise ist der Winkel β aus einem bestimmten Bereich ausgewählt, wobei der Winkel β vorzugsweise kleiner ist als 90°, bevorzugt kleiner ist als 70° und besonders bevorzugt kleiner ist als 65° und weiter vorzugsweise ist der Winkel β größer als 0°, bevorzugt größer als 15° und besonders bevorzugt größer als 30°. Weiter vorzugsweise ist der Winkel β im Wesentlichen 30°, 45° oder 60°. Weiter vorzugsweise weicht der Winkel β nur geringfügig von einem der zuvor genannten drei Winkelwerte ab, wobei unter geringfügig vorzugsweise ein Bereich von vorzugsweise +/- 7,5°, bevorzugt +/- 5° und besonders bevorzugt von +/- 2,5° zu verstehen ist. Insbesondere durch die beschriebene Wahl des Winkels β aus dem genannten Bereich ist ein besonders stabiler Drehmomentübertragungsbereich und damit eine gleichmäßige Drehmomenteinleitung von der Werkzeugmaschine in die Werkzeugeinrichtung erreichbar. Das übertragbare Drehmoment steigt insbesondere mit abnehmenden Winkel β, vorzugsweise wird der Winkel β, insbesondere für Auslegungen bei welchen ein hohes übertragbares Drehmoment im Vordergrund steht, aus einem Bereich gewählt für den gilt 0° < β < 30°. Der Bauraumbedarf nimmt insbesondere mit steigendem Winkel β ab, vorzugsweise wird der Winkel β, insbesondere bei Auslegungen für welche ein geringer Bauraumbedarf im Vordergrund steht, aus einem Bereich gewählt für den gilt 60° < β < 90°. In einer besonders bevorzugten Ausführungsform, bei welcher insbesondere ein großes Drehmoment übertragbar ist und ein geringer Bauraumbedarf entsteht beträgt der Winkel β im Wesentlichen 60°.

In einer bevorzugten Ausführungsform weist der Drehmomentübertragungsbereich eine gerade Anzahl von Abtriebsflächenbereichen auf. Vorzugsweise weist der Drehmomentübertragungsbereich 4 oder mehr, bevorzugt 8 oder mehr und besonders bevorzugt 16 oder mehr Abtriebsflächenbereiche auf. Weiter vorzugsweise weist der Drehmomentübertragungsbereich 64 oder weniger, bevorzugt 48 oder weniger und besonders bevorzugt 32 oder weniger Abtriebsflächenbereiche auf. Weiter vorzugsweise weist der Drehmomentübertragungsbereich eine ungerade Anzahl an Abtriebsflächenbereichen auf, bevorzugt eine gerade Anzahl an Abtriebsflächenbereichen. Vorzugsweise ist die Anzahl der Abtriebsflächenbereiche von der Größe des Drehmomentübertragungsbereichs abhängig. Weiter vorzugsweise können große Drehmomentübertragungsbereiche auch größere Anzahlen von Abtriebsflächenbereichen aufweisen als die hier angegebene. Dabei ist unter einem großen Drehmomentübertragungsbereich insbesondere ein Drehmomentübertragungsbereich zu verstehen, welcher im Wesentlichen einen Durchmesser von mehr als 50 mm oder mehr aufweist. Besonders bevorzugt weist der Drehmomentübertragungsbereich einen Durchmesser von im Wesentlichen 30 mm auf. Es hat sich gezeigt, dass ein derartiger Durchmesser insbesondere bei handgeführten Werkzeugmaschinen mit Oszillationsantrieb einerseits einen geringen Bauraumbedarf aufweist und andererseits die auftretenden Antriebskräfte sicher übertragbar sind. Insbesondere durch die gerade Anzahl von Abtriebsflächenbereichen können die Antriebskräfte von der Werkzeugmaschine paarweise auf die Werkzeugeinrichtung übertragen werden. Dabei hat sich gezeigt, dass insbesondere durch diese paarweise Einleitung der Antriebskräfte in die Werkzeugeinrichtung ein besonders langlebiger und damit verbesserter Drehmomentübertragungsbereich erreichbar ist.

In einer bevorzugten Ausführungsform sind die Abtriebsflächenbereiche im Wesentlichen sternartig angeordnet. Vorzugsweise sind die Abtriebsflächenbereiche im Wesentlichen sternartig um die Abtriebsachse angeordnet. Weiter vorzugsweise wird durch die Abtriebsflächenbereiche wenigstens abschnittsweise ein dreidimensionaler Körper beziehungsweise eine dreidimensionale Ausnehmung beschrieben, geschnitten mit einer zur Abtriebsachse orthogonalen Ebene weist dieser im Wesentlichen die Grundfläche eines sternförmigen Polygons auf.

Unter dem Begriff Polygon wird im Sinne der vorliegenden Erfindung nicht nur die mathematisch exakte Form mit recht- stumpf- oder spitzwinkeligen Ecken verstanden, sondern auch eine Form, bei der die Ecken abgerundet sind.

Vorzugsweise ist dieses sternförmige Polygon rotationssymmetrisch. Weiter vorzugsweise erscheinen diese sternartig angeordneten Abtriebsflächenbereiche ähnlich einer Zahnwelle einer herkömmlichen Welle-Nabe-Verbindung, wobei diese Welle durch die doppelte Neigung der Abtriebsflächenbereiche eine kegelige Grundform aufweist. Insbesondere durch die sternförmige Anordnung dieser Abtriebsflächenbereiche ist es ermöglicht, eine Vielzahl von Abtriebsflächenbereichen auf kleinem Bauraum anzuordnen und so große Antriebskräfte von der Werkzeugmaschine sicher auf die Werkzeugeinrichtung zu übertragen.

In einer bevorzugten Ausführungsform weist eine Werkzeugmaschine eine Kodierungseinrichtung beziehungsweise ein Kodierungselement auf. Vorzugsweise weist eine derartige Kodierungseinrichtung eine Querschnittsfläche auf, bevorzugt ist die Querschnittsfläche in einer Ebene angeordnet, welche im Wesentlichen orthogonal zu dieser Abtriebsachse angeordnet ist. Vorzugsweise weist diese Kodierungseinrichtung eine axiale Erstreckung im Wesentlichen orthogonal zu dieser Querschnittsfläche und damit insbesondere parallel zu dieser Abtriebsachse auf. Insbesondere durch diese axiale Erstreckung und deren Ausrichtung ist es ermöglicht, dass eine Kodierungseinrichtung einer Werkzeugeinrichtung besonders gut mit dieser Kodierungseinrichtung der Werkzeugmaschine zusammenwirkt und dadurch ist ein besonders sicheres Aufnehmen der Werkzeugeinrichtung an der Werkzeugmaschine ermöglicht.

In einer bevorzugten Ausführungsform ist eine dieser Kodierungseinrichtungen rotationssymmetrisch zu dieser Abtriebsachse und somit insbesondere auch zu dieser Werkzeug-Drehachse angeordnet. Vorzugsweise sind mehrere dieser Kodierungseinrichtungen rotationssymmetrisch zu dieser Abtriebsachse angeordnet. Vorzugsweise sind diese Kodierungseinrichtungen um fest vorgegebene Winkelinkremente um die Abtriebsachse versetzt, weiter vorzugsweise auf einem gemeinsamen Teilkreisdurchmesser. Bevorzugt weist ein Winkelinkrement die Größe von 1°, 2,5°, 10°, 15°, 22,5°, 30° oder 45° auf, weiter vorzugsweise um ein ganzzahlig Vielfaches eines solchen Winkelinkrements, weiter vorzugsweise sind diese Kodierungseinrichtungen um äquidistante Winkelinkremente versetzt, weiter vorzugsweise sind die Kodierungseinrichtungen auf einem Vollkreis von 360° um äquidistante Winkelinkremente versetzte, bevorzugt 2 mal 180°, 3 mal 120°, 4 mal 90°, 5 mal 72°, 6 mal 60°, 8 mal 45°, 9 mal 40°, 12 mal 30° oder 16 mal 22,5° oder dergleichen. Insbesondere durch diese Verteilung der Kodierungseinrichtungen ist es ermöglicht, die Werkzeugeinrichtung gemäß der vorliegenden Winkelinkremente um die Abtriebsachse zu versetzten und wieder sicher aufzunehmen, wobei dadurch ein besonders sicheres Aufnehmen der Werkzeugeinrichtung und insbesondere ein schnelles Einsetzten der Werkzeugeinrichtung in die Werkzeugmaschine ermöglicht ist.

In einer bevorzugten Ausführungsform, ist die Kodierungseinrichtung, insbesondere die Querschnittsfläche wenigstens einer Kodierungseinrichtung, aus einer bestimmten Gruppe von geometrischen Formen ausgewählt. Dabei umfasst diese Gruppe vorzugsweise:
- ein Polygon mit einer Vielzahl von Ecken, bevorzugt 3, 4, 5, 6, 7, 8, 9, 10 oder mehr,
- einen Kreis,
- eine Ellipse,
- einen Spline,
- eine Grundform mit mehreren Geraden, welche mittels Bögen miteinander verbunden sind oder eine Kombination aus mehreren der zuvor genannten Elemente.

Insbesondere weist die Kodierungseinrichtung der Werkzeugmaschine die gegengleiche Form zu einer Kodierungseinrichtung an der Werkzeugeinrichtung auf um vorzugsweise mit dieser Zusammenzuwirken (Nut-Feder-Prinzip).

In einer bevorzugten Ausführungsform ist die Halteeinrichtung aus einer Gruppe von Halteeinrichtungen ausgewählt, welche ein sicheres Befestigen der Werkzeugeinrichtung an der Werkzeugmaschine ermöglicht. Vorzugsweise ermöglichen Halteeinrichtungen, mittels welcher mittelbar oder unmittelbar eine kraft- oder formschlüssige Verbindung zwischen der Werkzeugeinrichtung und der Werkzeugmaschine herstellbar ist ein solches sicheres Befestigen. Eine derartige Gruppe von Halteeinrichtungen weist wenigstens eine der folgenden Einrichtungen oder eine Kombination mit zwei oder mehr dieser Einrichtungen auf:
- eine Schraubeinrichtung,
- eine Zugankereinrichtung,
- eine Hakeneinrichtung,
- eine Klippeinrichtung,
- eine Sperrklinkeneinrichtung,
- eine Bajonettverschlusseinrichtung,
- eine Einrichtung mit Rastvorsprüngen,
- eine Einrichtung mit Kugel- und Sperrabschnitten, insbesondere Kugelkalottenausnehmungen
oder dergleichen.

Dabei ist unter einer Schraubeinrichtung vorzugsweise eine Einrichtung zu verstehen, welche einen oder mehrere Gewindebereiche aufweist, weiter vorzugsweise wenigstens einen Schraubenteil und einen Mutternteil. Unter einer Zugankereinrichtung ist vorzugsweise eine Einrichtung zu verstehen, welche entlang, vorzugsweise einer Längsachse, mit einer Haltekraft beaufschlagbar ist und mit dieser Haltekraft auf die Werkzeugeinrichtung einwirkt. Vorzugsweise weist die Zugankereinrichtung wenigstens einen Spannbereich auf, in welchem die Haltekraft auf die Zugankereinrichtung aufbringbar ist, einen Übertragungsbereich und einen Haltebereich. Vorzugsweise wirkt die Zugankereinrichtung mit diesem Haltebereich mittelbar oder unmittelbar auf die Werkzeugeinrichtung ein und weiter vorzugsweise wird durch diesen Übertragungsbereich die Haltekraft von diesem Spannbereich auf diesen Haltebereich übertragen.

Weiter vorzugsweise ist unter einer Hakeneinrichtung ein dreh-, schwenk- oder verschiebbare Einrichtung zu verstehen, welche eine Wirkfläche zum Übertragen einer Haltekraftwirkung auf die Werkzeugeinrichtung aufweist.

Weiter vorzugsweise ist unter einer Klippeinrichtung eine Einrichtung zu verstehen, welche vorzugsweise gegen eine Federkraftwirkung bewegbar ist. Vorzugsweise weist die Klippeinrichtung einen ersten gespannten und einen zweiten ungespannten oder teilgespannten Betriebszustand auf. Vorzugsweise befindet sich die Klippeinrichtung, wenn keine Werkzeugeinrichtung an der Werkzeugmaschine aufgenommen ist, in diesem ungespannten oder gespannten Zustand. Weiter vorzugsweise befindet sich die Klippeinrichtung, wenn eine Werkzeugeinrichtung an der Werkzeugmaschine aufgenommen ist in einem ungespannten oder teilgespannten Zustand und stellt vorzugsweise mittelbar oder unmittelbar eine formschlüssige Verbindung zwischen Werkzeugeinrichtung und Werkzeugmaschine her.

Weiter vorzugsweise ist unter einer Sperrklinkeneinrichtung eine Einrichtung zu verstehen, welche durch wenigstens ein oder vorzugsweise mehrere Sperrklinkenelemente eine Bewegung einer Werkzeugeinrichtung wenigstens in einer Richtung gegenüber der Werkzeugmaschine durch eine formschlüssige Verbindung verhindert, dabei sind derartige Sperrklinkenelemente beweglich gelagert.

Weiter vorzugsweise ist unter einer Bajonettverschlusseinrichtung eine Einrichtung zu verstehen, welche wenigstens ein, vorzugsweise mehrere, Formschlusselemente aufweist. Vorzugsweise wirken derartige Formschlusselemente mit Gegenflächen zusammen, wobei vorzugsweise die Gegenflächen oder die Formschlusselemente an der Werkzeugeinrichtung mittelbar oder unmittelbar angeordnet sind und jeweils die anderen Abschnitte (Gegenflächen, Formschlusselemente) an der Werkzeugmaschine. Weiter vorzugsweise ist unter einer Einrichtung mit Rastvorsprüngen eine Einrichtung zu verstehen, welche mittelbar oder unmittelbar eine Formschlüssige Verbindung zwischen einer Werkzeugeinrichtung und der Werkzeugmaschine herstellt.

Weiter vorzugsweise ist unter eine Einrichtung mit Kugel- und Sperrabschnitten eine Einrichtung zu verstehen, welche wenigstens einen kugelförmigen Bereich oder wenigstens eine Kugel und einen Sperrabschnitt, in welchen dieser kugelförmige Bereich oder diese Kugel eingreifen kann, aufweist. Vorzugsweise weist wenigstens einer dieser Sperrabschnitt einen prismen-, zylinder- oder kugelkalottenartigen Bereich zum Eingreifen der kugelförmigen Bereich oder der Kugel auf. Wobei durch dieses Eingreifen mittelbar oder unmittelbar eine formschlüssige Verbindung zwischen einer Werkzeugeinrichtung und der Werkzeugmaschine herstellbar ist.

Ein Werkzeugmaschinensystem, beziehungsweise Bearbeitungssystem, weist eine erfindungsgemäße Werkzeugmaschine und wenigstens eine Werkzeugeinrichtung zur Verwendung mit dieser Werkzeugmaschine auf. Dabei weist die Halteeinrichtung wenigstens eine Wirkfläche zum Übertragen einer Kraftwirkung auf die Werkzeugeinrichtung auf. Diese Wirkfläche ist vorzugsweise auf der der Werkzeugmaschine zugewandten Seite der Halteeinrichtung angeordnet. Weiter vorzugsweise weist die Halteeinrichtung eine Halteeinrichtungs-Begrenzungsfläche auf. Diese Halteeinrichtungs-Begrenzungsfläche ist auf der von der Werkzeugmaschine abgewandten Seite der Halteeinrichtung angeordnet. Vorzugsweise ist die Wirkfläche der Halteeinrichtung dazu eingerichtet eine Haltekraft auf die Werkzeugeinrichtung zu übertragen. Bevorzugt ist die Halteeinrichtungs-Begrenzungsfläche im Wesentlichen gegenüberliegend zu dieser Wirkfläche angeordnet.

Die Werkzeugeinrichtung weist einen Werkzeuganschlussbereich und eine Werkzeug-Drehachse auf. Dabei weist dieser Werkzeuganschlussbereich wenigstens eine Seitenwandung auf. Dieser Werkzeuganschlussbereich erstreckt sich in axialer Richtung zwischen einer ersten und einer zweiten Orthogonalebene, wenigstens eine Komponente der Erstreckung des Werkzeuganschlussbereichs weist in Richtung der Werkzeug-Drehachse. Dabei ist eine solche Orthogonalebene insbesondere orthogonal zur Werkzeug-Drehachse angeordnet. Weiter vorzugsweise ist diese Seitenwandung radial beabstandet zu dieser Werkzeug-Drehachse und weist eine axiale Erstreckung in Richtung der Werkzeug-Drehachse auf. Weiter vorzugsweise verläuft diese Seitenwandung radial geschlossen oder bevorzugt unterbrochen oder mit Ausnehmungen um diese Werkzeug-Drehachse.

Durch diese Halteeinrichtung wird auf die Werkzeugeinrichtung, wenn diese in der Werkzeugmaschine aufgenommen ist, im Bereich der Wirkfläche dieser Halteeinrichtung eine Kraftwirkung ausgeübt, insbesondere eine Haltekraftwirkung, welche die Werkzeugeinrichtung an der Werkzeugmaschine hält. Diese Kraftwirkung, insbesondere Haltekraftwirkung, weist wenigstens eine Komponente in Richtung der Werkzeug-Drehachse auf, vorzugsweise ist diese Komponente der Kraftwirkung im Wesentlichen parallel zu dieser.

In einer bevorzugten Ausführungsform ist die Halteeinrichtungs-Begrenzungsfläche und die Wirkfläche der Halteeinrichtung zwischen der ersten und der zweiten Orthogonalebene dieses Werkzeug-Anschlussbereichs angeordnet, wenn die Werkzeugeinrichtung an der Werkzeugmaschine aufgenommen ist. Weiter vorzugsweise sind die Halteeinrichtungs-Begrenzungsfläche und die Wirkfläche der Halteeinrichtung in axialer Richtung im Bereich der axialen Erstreckung der Werkzeug-Antriebsflächenbereiche angeordnet, wenn die Werkzeugeinrichtung an der Werkzeugmaschine aufgenommen ist. Vorzugsweise bildet der Werkzeug-Anschlussbereich eine ringförmige Gestalt aus, bevorzugt eine konische Gestalt, weiter vorzugsweise ist die Wirkfläche, vorzugsweise einer, bevorzugt aller Halteeinrichtungen radial und axial innerhalb dieser Gestalt angeordnet, wenn die Werkzeugeinrichtung an der Werkzeugmaschine aufgenommen ist. Insbesondere durch eine solche Ausgestaltung der Werkzeugeinrichtung und der Werkzeugmaschine ist es ermöglicht, dass die Halteeinrichtung in axialer Richtung nicht über die Werkzeugeinrichtung hinausragt, somit ist ein besonders sicherer Betrieb des Werkzeugmaschinensystems ermöglicht.

In einer bevorzugten Ausführungsform weist die Seitenwandung der Werkzeugeinrichtung Werkzeug-Antriebsflächenbereiche auf. Vorzugsweise erstrecken sich diese Antriebsflächenbereiche in radialer Richtung wenigstens abschnittsweise zwischen einem ersten und einem zweiten radialen Abstand zu dieser Werkzeug-Drehachse. Weiter vorzugsweise ist wenigstens einer dieser Bereiche zur Drehmomentübertragung bzw. zur Antriebskraftübertragung von der Werkzeugmaschine auf die Werkzeugeinrichtung eingerichtet. Weiter vorzugsweise weist der Drehmomentübertragungsbereich der Werkzeugmaschine wenigstens abschnittsweise den geometrisch konjugierten Verlauf zu diesen Werkzeug-Antriebsflächenbereichen auf. Insbesondere durch diese radialen Erstreckungen der Werkzeug-Antriebsflächenbereiche ist eine formschlüssige Antriebskraftübertragung und damit eine besonders sichere Form der Antriebskraftübertragung von der Werkzeugmaschine auf die Werkzeugeinrichtung ermöglicht.

In einer bevorzugten Ausführungsform weist die Seitenwandung der Werkzeugeinrichtung Werkzeug-Antriebsflächenbereiche auf. Vorzugsweise weist die Seitenwandung wenigstens abschnittsweise den konjugierten Verlauf zu den Abtriebsflächenbereichen des Drehmomentübertragungsbereichs auf. Weiter vorzugsweise kontaktiert einer, bevorzugt kontaktieren mehrere, besonders bevorzugt kontaktieren alle diese Werkzeug-Antriebsflächenbereiche diese Abtriebsflächenbereiche wenigstens abschnittsweise in Form einer Punktberührung, bevorzugt in Form einer Linienberührung und besonders bevorzugt in Form einer Flächenberührung. Insbesondere mittels einer Punktberührung ist eine besonders einfache Positionierung der Werkzeugeinrichtung gegenüber der Werkzeugmaschine ermöglicht; insbesondere mittels einer Flächenberührung ist gegenüber einer Punktberührung eine Übertragung größerer Antriebskräfte ermöglicht; insbesondere mittels einer Flächenberührung ist gegenüber einer Linienberührung eine Übertragung größerer Antriebskräfte ermöglicht. Insbesondere bei einer Linien- oder Punktberührung ist eine elastische Verformung eines Abtriebsflächenbereichs oder Werkzeug-Antriebsflächenbereichs ermöglicht, so dass mehrere Antriebs-/Abtriebsflächenbereiche sich kontaktieren können und eine größere Antriebskraft übertragbar ist.

Die nachfolgenden Figuren zeigen verschiedene Merkmale und Ausführungsformen der Erfindung und sind teilweise schematisiert, wobei auch eine Kombination einzelner Merkmale und Ausführungsformen über die Figuren hinaus möglich ist.

Dabei zeigt
- Fig. 1: eine Seitenansicht (Fig. 1a) und eine Draufsicht (Fig. 1b) eines Drehmomentübertragungsbereichs mit zwei Abtriebsflächenbereichen,
- Fig. 2: eine Seitenansicht eines Drehmomentübertragungsbereichs mit Abtriebsflächenbereichen, welche sich zwischen Begrenzungsebenen erstrecken,
- Fig. 3: eine Draufsicht (Fig. 3a) und eine Seitenansicht (Fig. 3b) eines Drehmomentübertragungsbereichs mit jeweils zwei Abtriebsflächenbereichen, welche aneinanderstoßend angeordnet sind,
- Fig. 4: eine Draufsicht (Fig. 4a) und eine Seitenansicht (Fig. 4b) eines Ausschnitts eines Drehmomentübertragungsbereichs und die Neigung eines Abtriebsflächenbereichs um den Winkel β,
- Fig. 5: eine Schnittdarstellung eines Drehmomentübertragungsbereichs und die Neigung eines Abtriebsflächenbereichs um den Winkel α,
- Fig. 6: eine perspektivische Darstellung eines Drehmomentübertragungsbereichs mit sternförmiger Anordnung der Abtriebsflächenbereiche um die Abtriebsachse,
- Fig. 7: eine Draufsicht (Fig. 7a) und eine Seitenansicht (Fig. 7b) eines Drehmomentübertragungsbereichs mit sternförmiger Anordnung der Abtriebsflächenbereiche,
- Fig. 8: zwei Schnittdarstellungen von Drehmomentübertragungsbereichen mit unterschiedlichen Kodierungseinrichtungen,
- Fig. 9: eine Schnittdarstellung eines Werkzeugmaschinensystems,
- Fig. 10: eine Draufsicht auf den Verlauf der Seitenwandung der Werkzeugeinrichtung, welcher die Werkzeug-Antriebsflächenbereiche aufweist,
- Fig.11: perspektivische Darstellungen von Berührbereichen (Fig. 11a, Punktberührung; Fig. 11b, Linienberührung; Fig. 11c, Flächenberührung) zwischen den Abtriebsflächenbereichen und den Werkzeug-Antriebsflächenbereichen,
- Fig.12: perspektivische Darstellungen von unterschiedlich gekrümmte Abtriebsflächenbereiche,
- Fig.13: eine Schnittdarstellung einer Werkzeugeinrichtung welche mittels einer Schraubeinrichtung an der Werkzeugmaschine gehalten wird,
- Fig.14: eine Schnittdarstellung einer Werkzeugeinrichtung welche mittels einer Zugankereinrichtung und einem Mutternteil an der Werkzeugmaschine gehalten wird,
- Fig.15: eine Seitenansicht einer Werkzeugmaschine mit einer Werkzeugeinrichtung,
- Fig.16: eine Draufsicht (von Unten) auf eine Ausführungsform des Drehmomentübertragungsbereichs der Werkzeugmaschine,
- Fig.17: eine Schnittdarstellung einer Ausführungsform des Drehmomentübertragungsbereichs der Werkzeugmaschine.

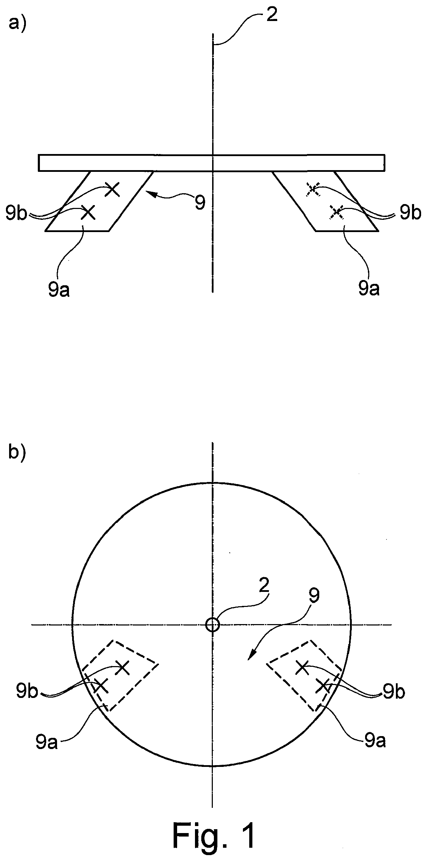

Figur 1 zeigt zwei Ansichten eines Drehmomentübertragungsbereichs 9 einer Werkzeugaufnahmeeinrichtung (Fig.1a Vorderansicht, Fig.1b Draufsicht). Dieser Drehmomentübertragungsbereich 9 weist zwei Abtriebsflächenbereiche 9a auf, auf denen jeweils mehrere Flächenpunkte 9b dargestellt sind. Der Drehmomentübertragungsbereich 9 ist dazu eingerichtet, Antriebskräfte von der Werkzeugmaschine auf eine Werkzeugeinrichtung (nicht dargestellt) zu übertragen. Die Werkzeugmaschine treibt die Werkzeugeinrichtung dreh-oszillierend an, dabei oszilliert die Werkzeugeinrichtung um die Abtriebsachse 2, welche im Wesentlichen mit der Werkzeug-Drehachse zusammenfällt. Die Abtriebsachse 2 ist eine fiktive, geometrische Achse.

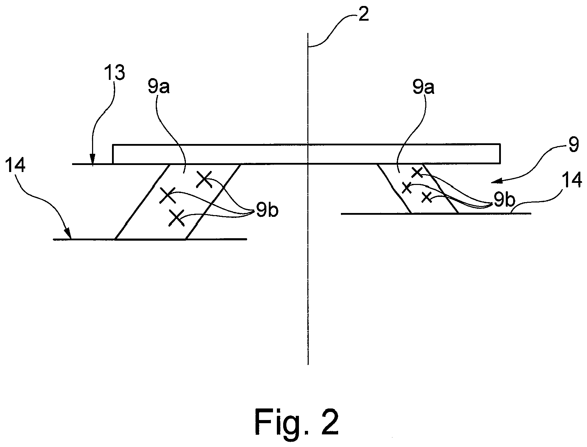

Figur 2 zeigt einen Drehmomentübertragungsbereich 9 einer Werkzeugmaschine, dieser ist dazu eingerichtet Antriebskräfte von der Werkzeugmaschine auf die Werkzeugeinrichtung (nicht dargestellt) zu übertragen. Der Drehmomentübertragungsbereich 9 weist zwei Abtriebsflächenbereiche 9a auf. Auf jedem Abtriebsflächenbereich 9a sind mehrere Flächenpunkte 9b dargestellt. Die Abtriebsflächenbereiche 9a erstrecken sich jeweils zwischen einer oberen Begrenzungsebene 13 und einer unteren Begrenzungsebene 14, wobei die oberen Begrenzungsebenen in einer Begrenzungsebene 13 zusammenfallen. Die Begrenzungsebenen 13/14 sind orthogonal zur Abtriebsachse 2 angeordnet. Mittels der Werkzeugmaschine wird die Werkzeugeinrichtung (nicht dargestellt) dreh-oszillierend um die Abtriebsachse 2 angetrieben.

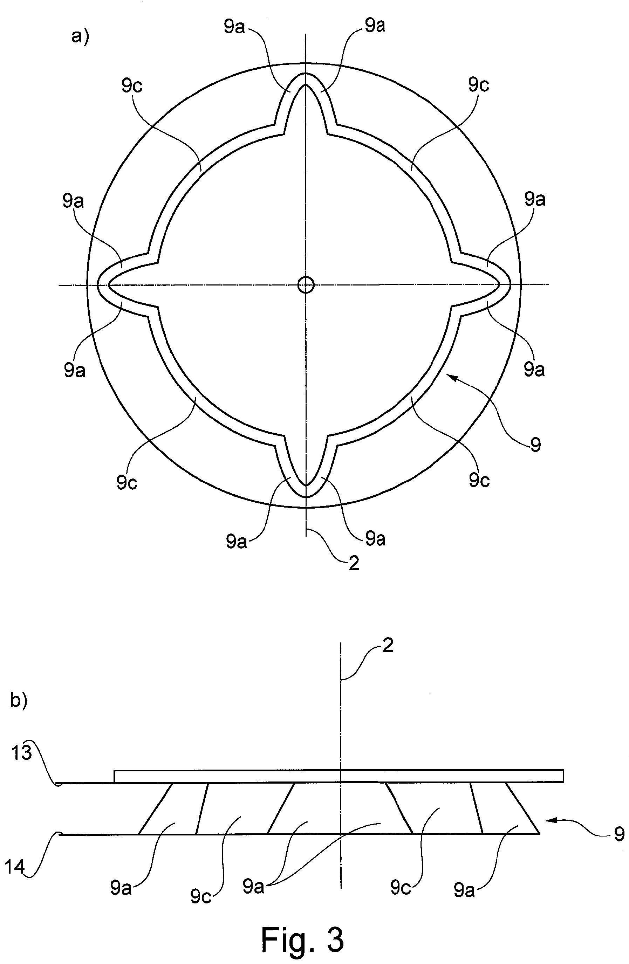

Figur 3 zeigt zwei Ansichten eines Drehmomentübertragungsbereichs 9 einer Werkzeugmaschine (Fig.3a Draufsicht, Fig.3b Vorderansicht). Der Drehmomentübertragungsabschnitt 9 ist dazu vorgesehen Antriebskräfte von einer Werkzeugmaschine auf eine Werkzeugeinrichtung (nicht dargestellt) zu übertragen, die Werkzeugeinrichtung wird um die Abtriebsachse 2 drehoszillierend angetrieben. Jeweils zwei Abtriebsflächenbereiche 9a sind aneinanderstoßend angeordnet und mehrere dieser Abtriebsflächenbereiche 9a sind rotationssymmetrisch um die Abtriebsachse 2 angeordnet. Die Abtriebsachse 2 ist eine fiktive, geometrische Achse. Die Abtriebsflächenbereiche 9a erstrecken sich zwischen einer einzigen oberen 13 und einer einzigen unteren 14 Begrenzungsebene. Jeweils zwei Abtriebsflächenbereiche 9a sind mit zwei weiteren Abtriebsflächenbereichen 9a mittels eines Verbindungsbereichs 9c verbunden. Durch die aneinanderstoßende Anordnung der Abtriebsflächenbereiche 9a können sich diese gegeneinander abstützen und es wird ein besonders stabiler Drehmomentübertragungsbereich 9 ermöglicht. Durch die rotationssymmetrische Anordnung der Abtriebsflächenbereiche 9a ist es ermöglicht die Werkzeugeinrichtung in diskreten Schritten um die Abtriebsachse zu versetzten, somit ist ein flexibler Einsatz der Werkzeugmaschine ermöglicht.

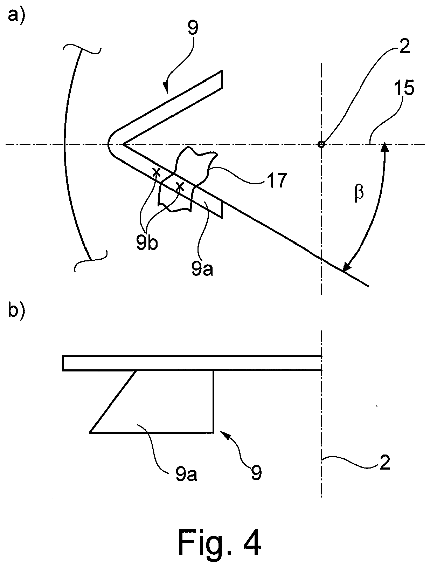

In Figur 4 sind zwei Ansichten eines Ausschnitts eines Drehmomentübertragungsbereichs 9 der Werkzeugmaschine dargestellt (Fig.4a Draufsicht, Fig.4b Vorderansicht). Eine Axialebene 15 schließt die Abtriebsachse 2 ein. Eine Tangentialebene 17 tangiert den Abtriebsflächenbereich 9a in einem Flächenpunkt 9b. Die Tangentialebene 17 schließt mit der Axialebene 15 den spitzen Winkel β ein.

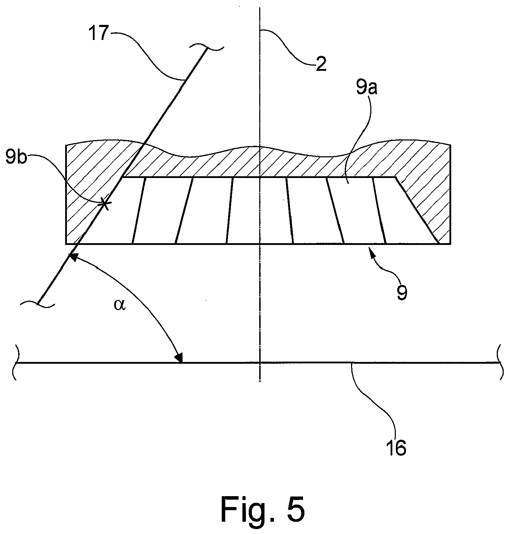

In Figur 5 ist eine Schnittdarstellung eines Drehmomentübertragungsbereichs 9 einer Werkzeugmaschine dargestellt. Der Drehmomentübertragungsbereich 9 weist eine Vielzahl von Abtriebsflächenbereichen 9a auf. Eine Tangentialebene 17 tangiert einen dieser Abtriebsflächenbereiche 9a in einem Flächenpunkt 9b. Orthogonal zur Abtriebsachse 2 ist eine Radialebene 16 angeordnet. Die Radialebne 16 schließt mit der Tangentialebene 17 einen spitzen Winkel α ein.

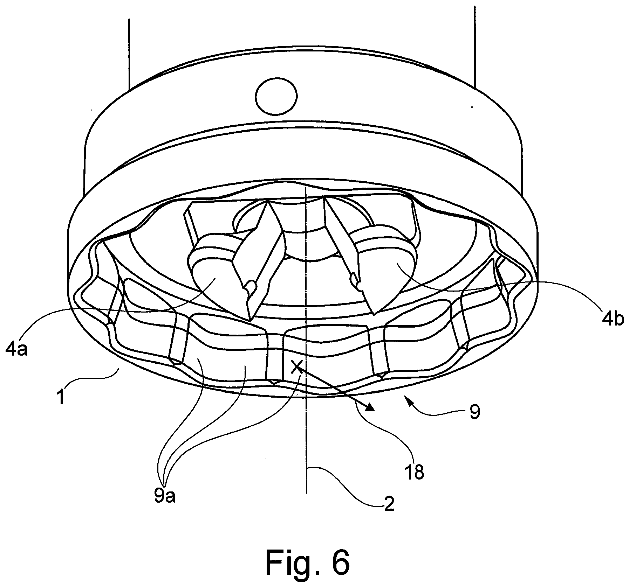

Figur 6 zeigt eine Werkzeugaufnahmeeinrichtung 1 in dreidimensionaler Darstellung. Der Drehmomentübertragungsbereich 9 weist eine Vielzahl von Abtriebsflächenbereichen 9a auf. Diese Abtriebsflächenbereiche 9a sind rotationssymmetrisch, sternförmig um die Abtriebsachse 2 angeordnet. Eine Werkzeugeinrichtung (nicht dargestellt) kann mittels der Hakeneinrichtungen 4a/b an der Werkzeugmaschine gehalten werden. Die Abtriebsflächenbereichen 9a sind dabei so angeordnet, dass eine Flächennormale 18 auf einen dieser Abtriebsflächenbereiche 9a in Richtung zu der Abtriebsachse 2 weist. Daraus ergibt sich, dass der Drehmomentübertragungsbereich 9 im Wesentlichen als eine Ausnehmung mit einem sternförmigen Profil gestaltet ist. Die Abtriebsflächenbereiche 9a sind aneinanderstoßend angeordnet und laufen radial geschlossen um die Abtriebsachse 2 um. Durch diese Anordnung wird ein besonders stabiler Drehmomentübertragungsbereich 9 ermöglicht, welcher eine gleichmäßige Einleitung der Antriebskräfte von der Werkzeugmaschine auf die Werkzeugeinrichtung (nicht dargestellt) erlaubt.

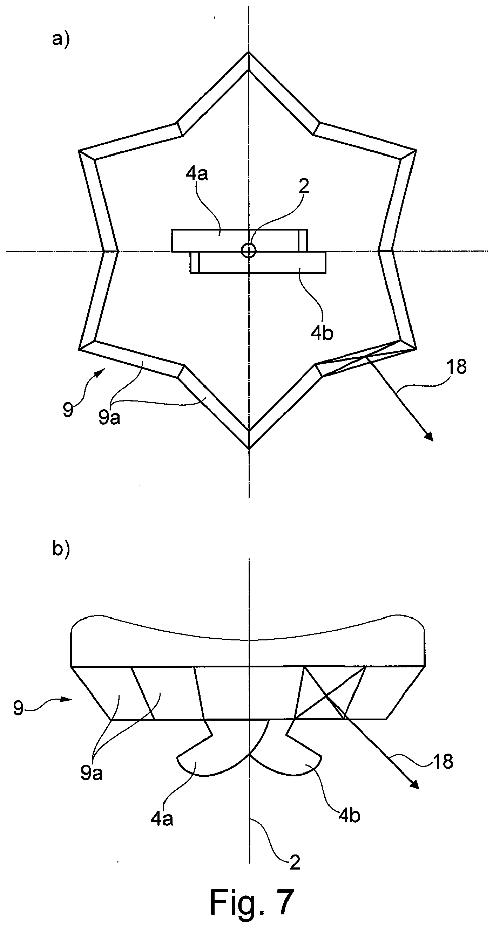

Figur 7 zeigt einen Drehmomentübertragungsbereich 9 einer Werkzeugaufnahmeeinrichtung einer handgeführten Werkzeugmaschine, dabei ist in Fig.7a eine Draufsicht und in Fig.7b eine Vorderansicht dieser Werkzeugaufnahmeeinrichtung dargestellt. Eine Werkzeugeinrichtung (nicht dargestellt) kann mittels der Hakeneinrichtungen 4a/b an einem Drehmomentübertragungsbereich 9 gehalten werden. Die Hakeneinrichtungen 4a/b sind hierzu gegenläufig bewegbar. Der Drehmomentübertragungsbereich 9 weist eine Vielzahl von Abtriebsflächenbereichen 9a auf, diese sind radial geschlossen umlaufend um die Abtriebsachse 2 und sternförmig angeordnet. Eine Flächennormale 18 auf einen dieser Abtriebsflächenbereiche 9a ist von der Abtriebsachse 2 weg orientiert. Durch eine derartige Anordnung der Abtriebsflächenbereiche 9a ist eine besonders einfache Werkzeugaufnahmeeinrichtung erreichbar.

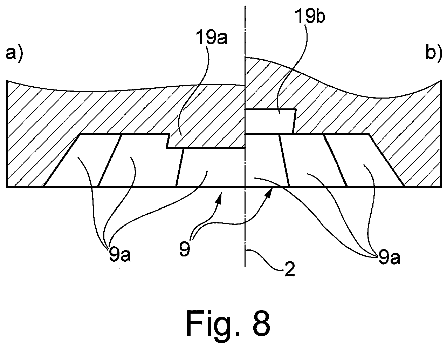

Figur 8 zeigt zwei Teilschnittdarstellungen von Drehmomentübertragungsbereichen 9 einer Werkzeugaufnahmeeinrichtung einer handgeführten Werkzeugmaschine, dabei sind in dieser Figur verschiedene Kodierungseinrichtungen 19 dargestellt. Fig.8a zeigt einen Drehmomentübertragungsbereich 9 mit einer Vielzahl von Abtriebsflächenbereichen 9a. Die Abtriebsflächenbereiche 9a sind sternförmig um die Abtriebsachse 2 angeordnet und radial beabstandet zu dieser. Im Bereich der Abtriebsachse 2 ist eine Kodierungseinrichtung 19a als erhabener Abschnitt angeordnet, dabei ist diese Kodierungseinrichtung 19a dazu eingerichtet in eine Ausnehmung in der Werkzeugeinrichtung (nicht dargestellt) einzugreifen. Die Kodierungseinrichtung 19a ist kreisrund und rotationssymmetrisch zur Abtriebsachse 2 angeordnet. Fig.8b zeigt einen Drehmomentübertragungsbereich 9 mit einer Vielzahl von Abtriebsflächenbereichen 9a. Die Abtriebsflächenbereiche 9a sind sternförmig um die Abtriebsachse 2 angeordnet und radial beabstandet zu dieser. Im Bereich der Abtriebsachse 2 ist eine Kodierungseinrichtung 19b als eine Ausnehmung angeordnet, dabei ist diese Kodierungseinrichtung 19b dazu eingerichtet, dass ein erhabener Abschnitt an einer Werkzeugeinrichtung (nicht dargestellt) in diese eingreift.

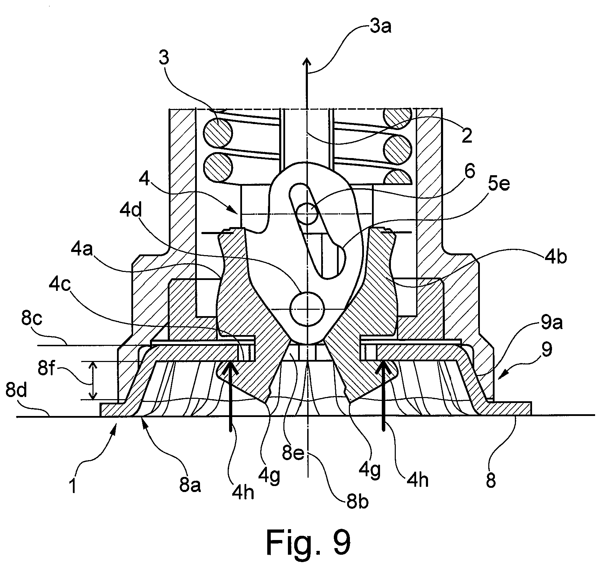

Figur 9 zeigt ein Werkzeugmaschinensystem beziehungsweise ein Bearbeitungssystem mit einer Werkzeugaufnahmeeinrichtung 1 und einer Werkzeugeinrichtung 8. Die Werkzeugeinrichtung 8 ist so an der Werkzeugaufnahmeeinrichtung 1 aufgenommen, dass die Abtriebsachse 2 und die fiktive, geometrische Werkzeug-Drehachse 8b zusammenfallen. Die Werkzeugeinrichtung 8 weist einen Werkzeuganschlussbereich 8a auf, dieser erstreckt sich zwischen einer ersten 8c und einer zweiten 8d Orthogonalebene. Der Werkzeug-Antriebsflächenbereich 8f ist zwischen der ersten und der zweiten Orthogonalebene 8c/d angeordnet. Die erste Orthogonalebene 8c begrenzt den Werkzeug-Anschlussbereich 8a auf der der Werkzeugmaschine zugewandten Seite in Richtung der Werkzeug-Drehachse 8b, die zweite Orthogonalebene 8d begrenzt den Werkzeug-Anschlussbereich 8a auf der von der Werkzeugmaschine abgewandten Seite. Der Werkzeug-Antriebsflächenbereich 8f ist zur Übertragung der Antriebskräfte von der Werkzeugmaschine auf die Werkzeugeinrichtung 8 vorgesehen und erstreckt sich in axialer Richtung im Bereich 8g. Dazu weist der Werkzeug-Antriebsflächenbereich 8f wenigstens abschnittsweise die negative Form des Abtriebsflächenbereichs 9a auf und ermöglicht damit eine formschlüssige Verbindung zwischen der Werkzeugeinrichtung 8 und der Werkzeugaufnahmeeinrichtung 1. Die Werkzeugeinrichtung 8 weist eine Werkzeug-Kodierungseinrichtung 8e auf, durch diese greifen die erste und die zweite Hakeneinrichtung 4a/b der Halteeinrichtung 4. Die Hakeneinrichtungen 4a/b üben im Bereich der Wirkflächen 4c eine Haltekraftwirkung 4h auf die Werkzeugeinrichtung 8 aus. Die Werkzeugeinrichtung 8 wird mittels dieser Haltekraftwirkungen 4h an der Werkzeugmaschine gehalten. Durch die doppelte Neigung um die Winkel α und β (nicht dargestellt) der Abtriebsflächenbereiche 9a des Drehmomentübertragungsbereichs 9 wird die Werkzeugeinrichtung 8 spielfrei in der Werkzeugaufnahmeeinrichtung 1 gehalten. Die Haltekraftwirkungen 4h werden mittelbar durch die Spanneinrichtung 3 aufgebracht. Die Hakeneinrichtungen 4a/b der Halteeinrichtung 4 sind um den Hakendrehpunkt 4d drehbar gelagert. Die Spanneinrichtung 3 kontaktiert mittels des Bewegungselements 6 die Halteeinrichtung 4. Durch die Gestaltung der Führungsausnehmung 5e wird die Summe der Haltekraftwirkungen 4h gegenüber der Spannkraft 3a verstärkt und ein besonders sicheres Halten der Werkzeugeinrichtung 8 in der Werkzeugaufnahmeeinrichtung 1 ermöglicht.

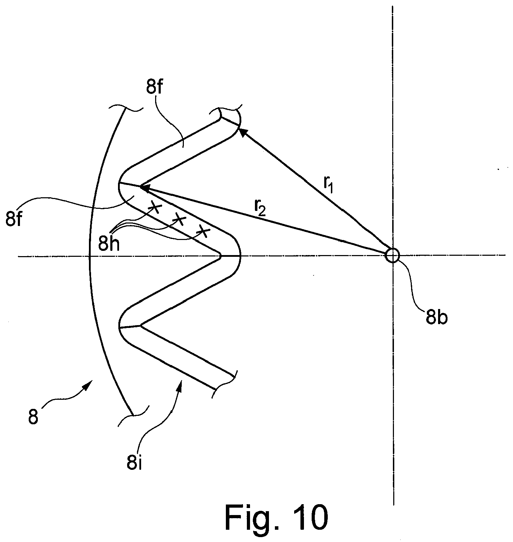

Figur 10 zeigt den Verlauf der Werkzeug-Seitenwandung 8i, wobei diese die Werkzeug-Antriebsflächenbereiche 8f aufweist. Die Werkzeug-Antriebsflächenbereiche 8f sind sternförmig um die Werkzeug-Drehachse 8b angeordnet und abschnittsweise konjugiert zu den Abtriebsflächenbereichen 9a des Drehmomentübertragungsbereichs (nicht dargestellt) angeordnet. Die Werkzeug-Seitenwandung 8i verläuft im Bereich der Werkzeug-Antriebsflächenbereiche 8f zwischen einem ersten Abstand r1 und einem zweiten Abstand r2 zur Werkzeug-Drehachse 8b. Die Werkzeug-Antriebsflächenbereiche 8f weisen ihrerseits Werkzeug-Flächenpunkte 8h auf. Durch den an die Abtriebsflächenbereiche 9a des Drehmomentübertragungsbereichs (nicht dargestellt) angepassten Verlauf der Werkzeug-Antriebsflächenbereiche 8f ist eine formschlüssige Übertragung der Antriebskräfte von der Werkzeugmaschine auf die Werkzeugeinrichtung 8 ermöglicht, damit können besonders große Antriebskräfte sicher übertragen werden.

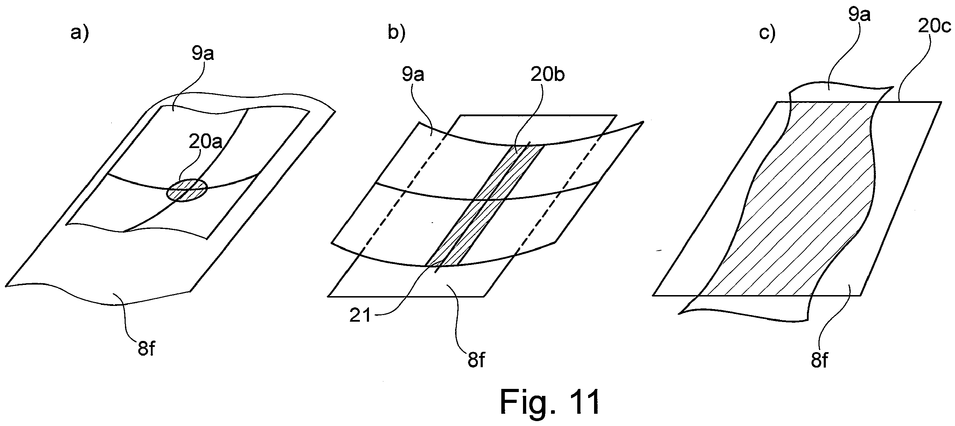

Figur 11 zeigt verschiedene Berührbereiche 20a, 20b, 20c zwischen dem Werkzeug-Antriebsflächenbereich 8f und dem Abtriebsflächenbereich 9a des Drehmomentübertragungsbereichs 9. Dabei hängt die Form und Art dieser Berührbereiche 20a, 20b, 20c von der Form der beiden Antriebs-/Abtriebsflächenbereiche 8f/9a und deren Zusammenwirken ab. Fig.11a zeigt einen punktförmigen Berührbereich 20a, dabei weist dieser Berührbereich 20a eine kreisrunde oder ellipsenförmige Ausdehnung auf. Ein punktförmiger Berührbereich 20a ist besonders unempfindlich gegenüber einer ungenauen Positionierung der Werkzeugeinrichtung gegenüber der Werkzeugmaschine, wie diese durch Toleranzen bei der Fertigung der Werkzeugeinrichtung verursacht werden kann. Fig.11b zeigt einen linienförmigen Berührbereich 20b, dabei weist dieser Berührbereich 20b entlang der Berührlinie 21 eine große Erstreckung und quer zu dieser eine kleine Erstreckung auf. Ein linienförmiger Berührbereich 20b bietet gegenüber einem punktförmigen Berührbereich 20a eine größere Kontaktfläche und es lassen sich größere Antriebskräfte von der Werkzeugmaschine auf die Werkzeugeinrichtung übertragen. Fig. 11c zeigt einen flächigen Berührbereich 20c. Ein flächiger Berührbereich 20c bietet gegenüber einem linienförmigen Berührbereich 20b eine größere Kontaktfläche und es lassen sich daher größere Antriebskräfte von der Werkzeugmaschine auf die Werkzeugeinrichtung übertragen. Gegenüber einer punktförmigen Berührung 20a erfordern eine linienförmige 20b und eine flächige 20c Berührung eine höhere Genauigkeit, sowohl bei der Fertigung der Antriebs-/Abtriebsflächenbereiche 8f/9a als auch bei der Positionierung der Werkzeugeinrichtung an der Werkzeugmaschine. Die Abtriebsflächenbereiche 9a und die Werkzeug-Antriebsflächenbereiche 8f können so aufeinander abgestimmt sein, dass sich eine flächige (Fig. 11c) oder linienförmige Berührung (Fig.11b) erst bei der Übertagung von nennenswerten Antriebskräften einstellt, beispielsweise bei Betrieb der Werkzeugmaschine mit Nennleistung.

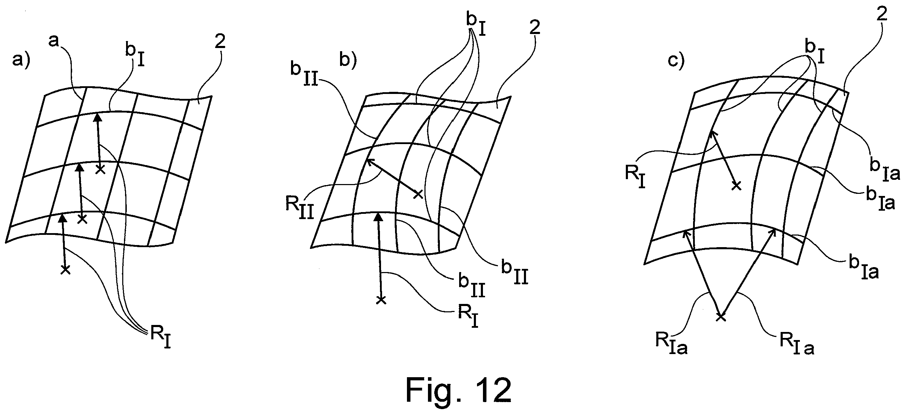

Figur 12 zeigt unterschiedliche Ausschnitte eines Abtriebsflächenbereichs 9a. Nicht dargestellt ist ein ebener Abtriebsflächenbereich, ein solcher ist eine weitere bevorzugte Ausgestaltung. Fig.12a zeigt einen einsinnig gekrümmten Abschnitt eines Abtriebsflächenbereichs 9a. Dieser Abschnitt des Abtriebsflächenbereichs 9a ist mittels gerader Gitternetzlinien a und gekrümmter Gitternetzlinien b_{I} beschreibbar. Die gekrümmten Gitternetzlinien b_{I} weisen einen konstanten Krümmungsradius R_{I} auf. Ein derartiger Abtriebsflächenbereich 9a entspricht abschnittsweise einer Zylindermantelfläche, soweit mehrere unterschiedliche Krümmungsradien R_{I} vorgesehen sind entspricht er einer Kegelmantelfläche (nicht dargestellt). Dabei kann die Größe des Krümmungsradius R_{I} so gewählt sein, dass sich der Abtriebsflächenbereich 9a bei der Übertragung von Antriebskräften abschnittsweise zu einer Ebene verändert oder an die Gegenfläche (nicht dargestellt), also den Werkzeug-Antriebsflächenbereich 8f, mit welcher dieser zum Übertragen der Antriebskräfte zusammenwirkt, anpasst. Fig.12b zeigt einen Abschnitt eines Abtriebsflächenbereichs 9a mit zweisinniger Krümmung. Dieser Abschnitt des Abtriebsflächenbereichs 9a ist mittels gekrümmter Gitternetzlinien b_{I} und gekrümmter Gitternetzlinien b_{II} beschreibbar. Die Gitternetzlinien b_{I} weisen einen konstanten Krümmungsradius R_{I} und die Gitternetzlinien b_{II} weisen einen konstanten Krümmungsradius R_{II} auf. Ein derartiger Abtriebsflächenbereich 9a entspricht, für den Sonderfall, dass der erste R_{I} und der zweite R_{II} Krümmungsradius gleich groß sind, einer Kugeloberfläche. In Fig.12b ist eine Abtriebsflächenbereich 9a mit unterschiedlichen Krümmungsradien R_{I} und R_{II} dargestellt. Dabei kann die Größe der Krümmungsradien R_{I} und R_{II} so gewählt sein, dass sich der Abtriebsflächenbereich 9a bei der Übertragung von Antriebskräften wenigstens abschnittsweise zu einer Ebene verändert oder an den Werkzeug-Antriebsflächenbereich 8f (nicht dargestellt) mit welchem dieser zum Übertragen der Antriebskräfte zusammenwirkt, anpasst. Fig.12c zeigt einen Abschnitt eines Abtriebsflächenbereichs 9a mit zweisinniger Krümmung. Dieser Abschnitt des Abtriebsflächenbereichs 9a ist mittels Gitternetzlinien b_{I} mit konstantem Krümmungsradius R_{I} und Gitternetzlinien b_{Ia} mit variablem Krümmungsradius R_{Ia} beschreibbar. Bei einem derartigen Abtriebsflächenbereich 9a können auch sämtliche Gitternetzlinien einen variablen Krümmungsradius aufweisen (nicht dargestellt). Die Größe der Krümmungsradien R_{Ia} und R_{II} kann so gewählt sein, dass sich der Abtriebsflächenbereich 9a bei der Übertragung von Antriebskräften abschnittsweise zu einer Ebene verändert oder an den Werkzeug-Antriebsflächenbereich 8f (nicht dargestellt) mit welchem dieser zum Übertragen der Antriebskräfte zusammenwirkt, anpasst. In Figur 12 sind konkav gekrümmte Abtriebsflächenbereiche 9a dargestellt, die dargelegten Überlegungen sind auf konvex gekrümmte Abtriebsflächenbereiche entsprechend übertragbar. Vorteilhaft wird eine konkav-konvex Paarung der Werkzeug-Antriebsflächenbereiche 8f und der Abtriebsflächenbereiche 9a gewählt oder konvex-konkav, da somit große Antriebskräfte übertragbar sind oder eine Paarung konvex-konvex, oder ebenkonvex, da somit eine einfache Positionierung der Werkzeugeinrichtung ermöglicht ist.

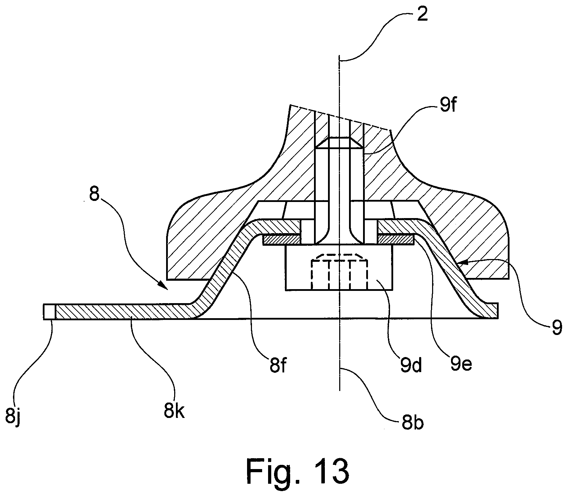

Figur 13 zeigt eine Werkzeugeinrichtung 8 welche mittels einer Schraubeinrichtung (Befestigungsschraube 9d, Unterlegscheibe 9e, Mutternteil 9f) an der Werkzeugmaschine (nicht dargestellt) befestigt ist. Die Werkzeugeinrichtung 8 weist einen Arbeitsbereich 8j auf, um auf ein Werkstück oder eine Werkstückanordnung einzuwirken. Vom Werkzeug-Antriebsflächenbereich 8f werden die Antriebskräfte mittels des Werkzeug-Verbindungsbereichs 8k auf diesen Arbeitsbereich 8j übertragen. Die Werkzeugeinrichtung 8 wird dabei mittels der Befestigungsschraube 9d, diese übt ihre Kraftwirkung mittels der Unterlegscheibe 9e auf die Werkzeugeinrichtung 8 aus, an der Werkzeugmaschine gehalten. Die Übertragung der Antriebskräfte von der Werkzeugmaschine auf die Werkzeugeinrichtung 8 wird im Wesentlichen durch das formschlüssige Ineinandergreifen des Drehmomentübertragungsbereichs 9 und des Werkzeug-Antriebsflächenbereichs 8f erreicht. Dabei wird die Werkzeugeinrichtung 8 so an der Werkzeugmaschine gehalten, dass die Werkzeug-Drehachse 8b und die Abtriebsachse 2 im Wesentlichen zusammenfallen. Die Werkzeugeinrichtung 8 wird dreh-oszillierend um die Abtriebsachse 2 angetrieben.

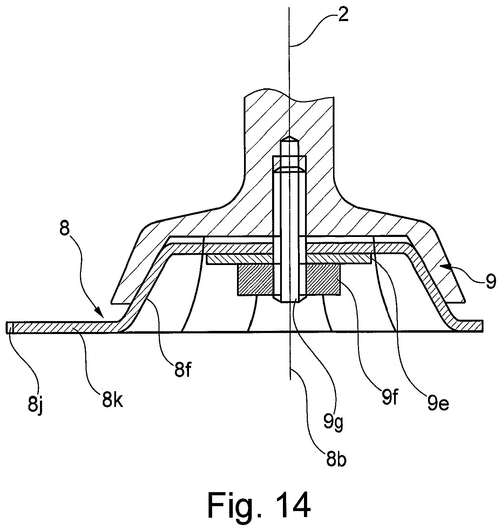

Figur 14 zeigt eine Werkzeugeinrichtung 8 welche mittels einer weiteren Schraubeinrichtung (Zugankereinrichtung 9g, Unterlegscheibe 9e, Mutternteil 9f) an der Werkzeugmaschine (nicht dargestellt) befestigt ist. Die Werkzeugeinrichtung 8 weist einen Arbeitsbereich 8j auf, um auf ein Werkstück oder eine Werkstückanordnung einzuwirken. Vom Werkzeug-Antriebsflächenbereich 8f werden die Antriebskräfte mittels des Werkzeug-Verbindungsbereichs 8k auf diesen Arbeitsbereich 8j übertragen. Die Werkzeugeinrichtung 8 wird dabei mittels des Mutternteils 9f und der Zugankereinrichtung 9g, diese üben ihre Kraftwirkung mittels der Unterlegscheibe 9e auf die Werkzeugeinrichtung 8 aus, an der Werkzeugmaschine gehalten. Die Übertragung der Antriebskräfte von der Werkzeugmaschine auf die Werkzeugeinrichtung 8 wird im Wesentlichen durch das formschlüssige Ineinandergreifen des Drehmomentübertragungsbereichs 9 und des Werkzeug-Antriebsflächenbereichs 8f erreicht. Dabei wird die Werkzeugeinrichtung 8 so an der Werkzeugmaschine gehalten, dass die Werkzeug-Drehachse 8b und die Abtriebsachse 2 im Wesentlichen zusammenfallen. Die Werkzeugeinrichtung 8 wird dreh-oszillierend um die Abtriebsachse 2 angetrieben.

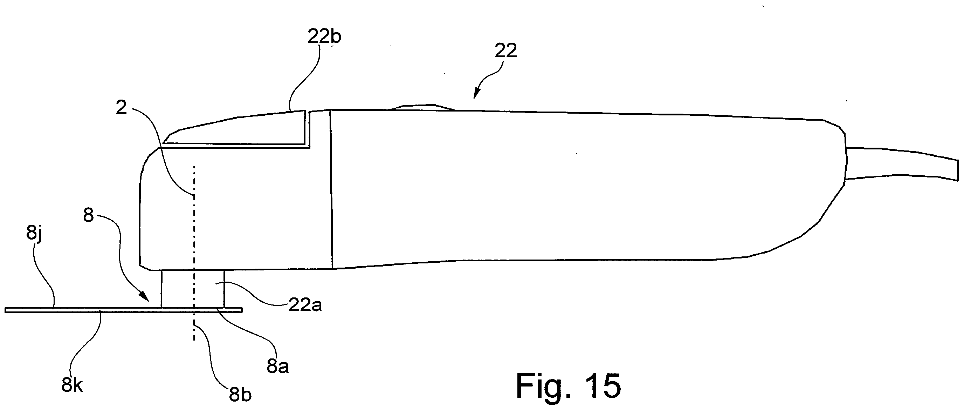

Figur 15 zeigt ein Werkzeugmaschinensystem mit einer Werkzeugeinrichtung 8 welche in einer Werkzeugmaschine 22 aufgenommen ist. Die Werkzeugeinrichtung 8 weist einen Werkzeug-Anschlussbereich 8a auf, mit diesem wird es mit der Werkzeugmaschine 22 verbunden. Die Werkzeugmaschine 22 weist eine Abtriebsspindel 22a auf, diese leitet die Antriebskräfte an die Werkzeugeinrichtung 8, insbesondere deren Werkzeug-Anschlussbereich 8a. Die Abtriebsspindel 22a bewegt sich um die Abtriebsachse 2, insbesondere dreh-oszillierend, dabei wird auch die Werkzeugeinrichtung 8 in eine ebensolche Bewegung versetzt. Die Werkzeugeinrichtung 8 weist einen Arbeitsbereich 8j auf, dieser ist dazu eingerichtet auf ein Werkstück oder eine Werkstückanordnung (nicht dargestellt) einzuwirken. Die Antriebskräfte der Werkzeugmaschine 22 werden mittels des Werkzeug-Verbindungsbereichs 8k vom Werkzeug-Anschlussbereich 8a auf den Arbeitsbereich 8j übertragen. Die Werkzeugmaschine 22 weist einen Betätigungshebel 22b auf, dieser ist dazu eingerichtet einen Wechsel der Werkzeugeinrichtung 8 zu ermöglichen.

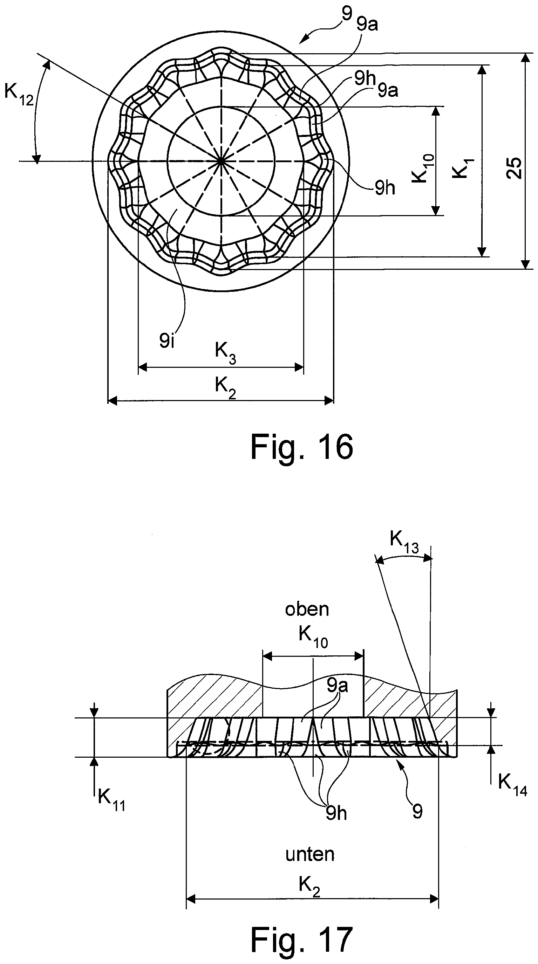

Figur 16 und Figur 17 zeigen einen Drehmomentübertragungsbereich 9 einer Werkzeugmaschine in unterschiedlichen Ansichten. Figur 16 zeigt eine Ansicht von Unten und Figur 17 zeigt eine Schnittdarstellung der Seitenansicht des Drehmomentübertragungsbereichs 9. Dabei ist unter einer Ansicht von Unten zu verstehen, dass von der Richtung aus der die Werkzeugeinrichtung in die Werkzeugmaschine einsetzbar ist, auf den Drehmomentübertragungsbereich 9 geblickt wird. Der dargestellte Drehmomentübertragungsbereich 9 der Werkzeugmaschine ist in den Figuren 16 und 17 als ein sternförmiges Polygon mit abgerundeten Ecken dargestellt, dabei lassen sich die nachfolgend dargelegten Zusammenhänge wenigstens sinngemäß auch auf andere Formen eines solchen Drehmomentübertragungsbereichs 9 übertragen.

In der Ansicht von Unten, Figur 16, sind die abgerundeten Ecken (Übergangsbereiche 9h) des Polygons erkennbar. Ein sogenannter Arm des Polygons wird dabei durch zwei Abtriebsflächenbereiche 9a und einen Übergangsbereich 9h gebildet. Dabei ist ein solcher Übergangsbereich 9h vorzugsweise als eine Abrundung mit einem variablen oder konstanten Radius zu verstehen. Weiter vorzugsweise schließt sich ein solcher Übergangsbereich 9h an einen oder an beide Abtriebsflächenbereiche 9a tangential an. Weiter vorzugsweise ist der variable oder konstante Radius eines solchen Übergangsbereiches 9h aus einem Bereich zwischen 0,25 mm und 10 mm, bevorzugt zwischen 1 und 5 und besonders bevorzugt zwischen 2,5 mm und 4 mm gewählt. Die einzelnen Arme des Polygons sind jeweils um einen äquidistanten Winkel k12 gegeneinander versetzt. Vorzugsweise ergibt sich dieser, vorzugsweise äquidistante, Winkel k12 aus dem Zusammenhang: Vollkreis / (Anzahl der Arme) = k12; vorliegend 360°/12 = 30°. Vorzugsweise durch den äquidistanten Winkel k12 ist es ermöglicht, eine Werkzeugeinrichtung (nicht dargestellt) in unterschiedlichen Drehstellungen in diesem Drehmomentübertragungsbereich 9 und damit der Werkzeugmaschine aufzunehmen. Vorliegend lässt sich die Werkzeugeinrichtung in diskreten Schritten von 30° gegenüber dem Drehmomentübertragungsbereich 9 versetzen.

Der Drehmomentübertragungsbereich 9 weist einen Werkzeugmaschinen-Deckflächenabschnitt 9i auf, in diesem Werkzeugmaschinen-Deckflächenabschnitt 9i ist eine, vorzugsweise kreisrunde, Ausnehmung mit dem Durchmesser k10 angeordnet. Diese Ausnehmung mit dem Durchmesser k10 ist dazu eingerichtet eine Verbindungseinrichtung (nicht dargestellt) aufzunehmen beziehungsweise mit dieser zusammenzuwirken. Mittels der Verbindungseinrichtung kann die Werkzeugeinrichtung (nicht dargestellt) an der Werkzeugmaschine gehalten werden. Weiter vorzugsweise sind auch von der kreisrunden Form abweichende Formen für diese Ausnehmung möglich. Vorzugsweise ist diese Ausnehmung als eine Art Durchgangs- oder Sacklochausnehmung mit oder ohne Gewindebereich beziehungsweise als eine Durchtrittsausnehmung für eine Halteeinrichtung (nicht dargestellt) ausgestalte.

Die Durchmesser k2 und k3 beschreiben Innendurchmesser des Drehmomentübertragungsbereichs. In einer bevorzugten Ausführungsform ist der Innendurchmesser k2 vorzugsweise aus einem Bereich zwischen 30 mm und 36 mm gewählt, bevorzugt von 32 mm bis 34 mm, besonders bevorzugt ist der Innendurchmesser k2 im Wesentlichen 33,35 mm (+/- 0,1 mm).

In einer bevorzugten Ausführungsform ist der Innendurchmesser k3 vorzugsweise aus einem Bereich zwischen 22 mm und 27 mm gewählt, bevorzugt von 24 mm bis 26 mm, besonders bevorzugt ist der Innendurchmesser k3 im Wesentlichen 25 mm (+/- 0,1 mm).

Der Abstand k1 definiert den Abstand von zwei Abtriebsflächenbereichen 9a, welche sich in dieser Ansicht parallel gegenüber liegen (in einer räumlichen Betrachtung sind die Antriebsflächenbereiche 9a noch zueinander geneigt). Verglichen mit einem Schraubenkopf (beispielsweise einem Innensechskant) entspricht der Abstand k1 einer Schlüsselweite.

In einer bevorzugten Ausführungsform ist diese Schlüsselweite k1 vorzugsweise aus einem Bereich zwischen 26 mm und 30 mm ausgewählt, bevorzugt aus einem Bereich zwischen 27 mm und 29 mm, besonders bevorzugt ist die Schlüsselweite im Wesentlichen 28,4 mm (+/- 0,1 mm).

Der Durchmesser 25 gibt einen Referenzdurchmesser für den Drehmomentübertragungsbereich 9 der Werkzeugmaschine an. In einer bevorzugten Ausführungsform ist der Referenzdurchmesser 25 vorzugsweise aus einem Bereich zwischen 31 mm und 33 mm gewählt, bevorzugt aus einem Bereich zwischen 31,5 mm und 32,5 mm und besonders bevorzugt ist der Referenzdurchmesser 25 im Wesentlichen 32 mm (+/- 0,1 mm). Dabei ist der Referenzdurchmesser 25 weiter vorzugsweise als ein Nennmaß des Drehmomentübertragungsbereichs 9 aufzufassen und in Richtung der Abtriebsachse in einer bestimmten Höhe definiert.

In der Schnittdarstellung, Figur 17, ist insbesondere die Querschnittfläche des Drehmomentübertragungsbereichs 9 besonders gut erkennbar. Dabei ist der Drehmomentübertragungsbereich 9 im Wesentlichen als eine Sacklochausnehmung gestaltet. Wobei sich diese Ausnehmung in Richtung der Abtriebsachse 2 nach oben hin verjüngt und im Wesentlichen die Form eines Kegelstumpfes aufweist. Die Querschnittsfläche dieses Kegelstumpfs weist vorzugsweise die in Fig. 16 dargestellte Form eines Polygons mit abgerundeten Ecken auf, wobei diese Querschnittsfläche orthogonal zur Abtriebsachse 2 angeordnet ist.

Es hat sich gezeigt, dass insbesondere dann lange Lebensdauern für diesen Drehmomentübertragungsbereich 9 sowie für die in diesem aufgenommene Werkzeugeinrichtung 1 erreichbar sind, wenn bestimmte Übergänge, insbesondere zu den Abtriebsflächenbereichen 9a oder zwischen diesen, abgerundet sind. Dabei ist unter einer derartigen Abrundung zu verstehen, dass der Übergang zu diesen Abtriebsflächenbereichen einen konstanten oder variablen Radius aufweist.

Weiter vorzugsweise ist der variable oder konstante Radius eines solchen Bereichs, wie auch des Übergangsbereiches 9h, aus einem Bereich zwischen 0,25 mm und 10 mm, bevorzugt zwischen 1 mm und 5 mm und besonders bevorzugt zwischen 2,5 mm und 4 mm gewählt.

Die Abtriebsflächenbereiche 9a sind in der Darstellung der Figur 17 um den Winkel k13 gegenüber einer gedachten Senkrechten (parallel zur Abtriebsachse 2) geneigt. In einer bevorzugten Ausführungsform ist dieser Winkel aus einem Bereich zwischen 10° und 30° ausgewählt, vorzugsweise aus einem Bereich zwischen 17,5° und 22,5° und besonders bevorzugt ist der Winkel k13 im Wesentlichen 20° (+/- 0,5°).

Der Durchmesser k2 kennzeichnet vorzugsweise den Bereich des Drehmomentübertragungsbereichs 9, ab welchem die Abtriebsflächenbereiche 9a (von unten in Richtung der Abtriebsachse 2) im Wesentlichen geradlinig verlaufen. Nach diesem geradlinigen Verlauf, gehen die Abtriebsflächenbereiche 9a, vorzugsweise in den Radius k9 und danach in den Werkzeugmaschinen-Deckflächenabschnitt 9i über.

In einer bevorzugten Ausführungsform verlaufen die Abtriebsflächenbereiche 9 auf einer Höhe (Richtung parallel zur Abtriebsachse 2) wenigstens für das Maß k14 im Wesentlichen geradlinig, dabei ist unter geradlinig im Sinne der Erfindung zu verstehen, dass diese keine wesentliche Krümmung aufweisen, vorzugsweise im unbelastetem Zustand, weiter vorzugsweise in einem belasteten Zustand. Vorzugsweise ist das Maß k14 aus einem Bereich zwischen 1,5 mm und 10 mm ausgewählt, bevorzugt aus einem Bereich zwischen 2 mm und 6 mm, besonders bevorzugt ist das Maß k14 im Wesentlichen 4 mm (+/- 0,5 mm). Vorzugsweise ist unter dem Maß k14 der kürzeste geradlinige Verlauf eines der Abtriebsflächenbereiche 2 zu verstehen.

In einer bevorzugten Ausführungsform weist der Drehmomentübertragungsbereich 9 eine Tiefe k11 auf, weiter vorzugsweise ist die Tiefe k11 aus einem Bereich zwischen 3,5 mm und 10 mm ausgewählt, bevorzugt aus einem Bereich zwischen 4,5 mm und 8 mm und besonders bevorzugt ist die Tiefe k11 im Wesentlichen 6,5 mm (+/- 1 mm).

Im Folgenden sind zu bevorzugende Ausführungsformen der Erfindung übersichtlich zusammengefasst und nummeriert:
1. Werkzeugmaschine, insbesondere handgeführte Werkzeugmaschine, die eine um eine Abtriebsachse bewegbare, insbesondere oszillierend bewegbare, Werkzeugaufnahmeeinrichtung aufweist,
   wobei diese Werkzeugaufnahmeeinrichtung dazu eingerichtet ist, eine Werkzeugeinrichtung derart an der Werkzeugmaschine zu halten, dass die Abtriebsachse und eine Werkzeug-Drehachse im Wesentlichen zusammenfallen,
   wobei die Werkzeugaufnahmeeinrichtung wenigstens einen Drehmomentübertragungsbereich und eine Halteeinrichtung aufweist,
   wobei dieser Drehmomentübertragungsbereich zur Übertragung einer Antriebskraft auf die Werkzeugeinrichtung wenigstens zwei im Abstand zu dieser Abtriebsachse angeordnete Abtriebsflächenbereiche mit je einer Vielzahl von Flächenpunkten aufweist,
   wobei Tangentialebenen an diesen Flächenpunkten gegenüber einer Axialebene, welche diese Abtriebsachse einschließt, geneigt sind und,
   wobei diese Tangentialebenen gegenüber einer Radialebene, welche sich senkrecht zu der Abtriebsachse erstreckt, geneigt sind.
2. Werkzeugmaschine gemäß Ausführungsform 1, dadurch gekennzeichnet,
   dass wenigstens einer, bevorzugt eine Vielzahl und besonderes bevorzugt alle dieser Abtriebsflächenbereiche wenigstens abschnittsweis im Wesentlichen eben sind.
3. Werkzeugmaschine gemäß Ausführungsform 1, dadurch gekennzeichnet, dass wenigstens einer, vorzugsweise eine Vielzahl und bevorzugt alle diese Abtriebsflächenbereiche wenigstens abschnittsweise gekrümmt sind.
4. Werkzeugmaschine gemäß einer der vorhergehenden Ausführungsformen, dadurch gekennzeichnet,
   dass dieser Drehmomentübertragungsbereich wenigstens eine erste obere Begrenzungsebene und wenigstens eine zweite untere Begrenzungsebene aufweist,
   dass diese Begrenzungsebenen im Wesentlichen senkrecht zu dieser Abtriebsachse angeordnet sind,
   dass diese Begrenzungsebenen voneinander beabstandet sind und,
   dass jeder dieser Abtriebsflächenbereiche zwischen einer dieser ersten oberen und einer dieser zweiten unteren Begrenzungsebene angeordnet ist.
5. Werkzeugmaschine gemäß Ausführungsform 4, dadurch gekennzeichnet,
   dass sich eine Vielzahl, vorzugsweise alle, dieser Abtriebsflächenbereiche zwischen einer einzigen ersten oberen und einer einzigen zweiten unteren Begrenzungsebene erstrecken.
6. Werkzeugmaschine gemäß einer der vorhergehenden Ausführungsformen, dadurch gekennzeichnet,
   dass dieser Drehmomentübertragungsbereich eine Vielzahl von Abtriebsflächenbereichen aufweist, welche rotationssymmetrisch um die Abtriebsachse angeordnet sind.
7. Werkzeugmaschine gemäß einer der vorhergehenden Ausführungsformen, dadurch gekennzeichnet,
   dass wenigstens jeweils zwei, vorzugsweise mehrere, dieser Abtriebsflächenbereiche symmetrisch zu einer Symmetrieebene angeordnet sind,
   dass in dieser Symmetrieebene die Abtriebsachse liegt und,
   dass weiter vorzugsweise diese Abtriebsflächenbereiche im Wesentlichen aneinanderstoßend angeordnet sind.
8. Werkzeugmaschine gemäß einer der vorhergehenden Ausführungsformen, dadurch gekennzeichnet,
   dass dieser Drehmomentübertragungsbereich eine Seitenwandung aufweist,
   dass diese Seitenwandung radial beabstandet von der Abtriebsachse verläuft und,
   dass diese Seitenwandung die Abtriebsflächenbereiche aufweist.
9. Werkzeugmaschine gemäß Ausführungsform 8, dadurch gekennzeichnet,
   dass die Seitenwandung im Wesentlichen radial geschlossen um die Abtriebsachse umläuft.
10. Werkzeugmaschine gemäß einer der vorhergehenden Ausführungsformen, dadurch gekennzeichnet,
   dass eine Normale auf eine dieser Tangentialebenen in radialer Richtung von der Abtriebsachse weg orientiert ist, vorzugsweise alle Normalen dieser Tangentialebenen in radialer Richtung von der Abtriebsachse weg orientiert sind.
11. Werkzeugmaschine gemäß einer der Ausführungsformen 1 bis 9, dadurch gekennzeichnet,
   dass eine Normale auf eine dieser Tangentialebenen in radialer Richtung zu der Abtriebsachse hin orientiert ist, vorzugsweise alle Normalen dieser Tangentialebenen in radialer Richtung zu der Abtriebsachse hin orientiert sind.
12. Werkzeugmaschine gemäß einer der vorhergehenden Ausführungsformen, dadurch gekennzeichnet,
   dass zwischen einer dieser Tangentialebenen und dieser Radialebene, wobei diese Radialebene senkrecht zur Abtriebsachse angeordnet ist, der Winkel α eingeschlossen ist,
   dass der Winkel α vorzugsweise kleiner als 90°, bevorzugt kleiner als 80° und besonders bevorzugt kleiner als 75° ist,
   weiter vorzugsweise ist der Winkel α größer als 0°, bevorzugt größer als 45° und besonders bevorzugt größer als 60°,
   weiter vorzugsweise liegt der Winkel α in einem Bereich von 62,5° bis 72,5°.
13. Werkzeugmaschine gemäß einer der vorhergehenden Ausführungsformen, dadurch gekennzeichnet,
   dass zwischen einer dieser Tangentialebenen und dieser Axialebene, wobei in dieser Axialebene die Abtriebsachse liegt, der Winkel β eingeschlossen ist,
   dass der Winkel β vorzugsweise kleiner als 90°, bevorzugt kleiner als 70° und besonders bevorzugt kleiner als 65° ist und
   weiter vorzugsweise ist der Winkel β größer als 0°, bevorzugt größer als 15° und besonders bevorzugt größer als 30°,
   weiter vorzugsweise ist der Winkel β im Wesentlichen 30°, 45° oder 60°.
14. Werkzeugmaschine gemäß einer der vorhergehenden Ausführungsformen, dadurch gekennzeichnet,
   dass dieser Drehmomentübertragungsbereich eine gerade Anzahl von Abtriebsflächenbereichen aufweist, vorzugsweise 4 oder mehr, bevorzugt 8 oder mehr und besonders bevorzugt 16 oder mehr und,
   weiter vorzugsweise 64 oder weniger, bevorzugt 48 oder weniger und besonders bevorzugt 32 oder weniger.
15. Werkzeugmaschine gemäß einer der vorhergehenden Ausführungsformen, dadurch gekennzeichnet,
   dass diese Abtriebsflächenbereiche im Wesentlichen sternartig,
   vorzugsweise in Form eines sternförmigen Polygons angeordnet sind, wobei das Polygon vorzugsweise 4, 6, 8 oder 10 oder ganz besonders bevorzugt 12 oder weiter vorzugsweise 14, 16, 18 oder 20 Ecken aufweist.
16. Werkzeugmaschine gemäß einer der vorhergehenden Ausführungsformen,
   dadurch gekennzeichnet,
   dass die Werkzeugmaschine eine Kodierungseinrichtung aufweist,
   dass diese Kodierungseinrichtung wenigstens eine erste Querschnittsfläche aufweist,
   dass diese Kodierungseinrichtung eine erste Erstreckung im Wesentlichen in senkrechter Richtung zu dieser Querschnittsfläche aufweist, vorzugsweise ist diese erste Erstreckung in Richtung dieser Abtriebsachse gerichtet.
17. Werkzeugmaschine gemäß Ausführungsform 16, dadurch gekennzeichnet,
   dass eine dieser Kodierungseinrichtungen oder mehrere dieser Kodierungseinrichtungen rotationssymmetrisch zu dieser Abtriebsachse angeordnet sind.
18. Werkzeugmaschine gemäß einer der Ausführungsformen 16 oder 17, dadurch gekennzeichnet,
   dass die Form wenigstens einer, vorzugsweise aller, Kodierungseinrichtungen aus einer Gruppe von Formen ausgewählt ist, welche wenigstens:
   - ein Polygon mit einer Vielzahl von Ecken, vorzugsweise 3, 4, 5, 6, 7, 8 oder mehr,
   - einen Kreis,
   - eine Ellipse,
   - einen Bogen mit einem variablen oder konstanten Radius oder
   - eine Kombination aus mehreren dieser Formen
   umfasst.
19. Werkzeugmaschine gemäß einer der vorhergehenden Ausführungsformen, dadurch gekennzeichnet,
   diese Halteeinrichtung wenigstens eine, aus einer Gruppe von Einrichtungen ausgewählte Einrichtung aufweist oder eine Kombination aus mehreren dieser Einrichtungen und,
   dass diese Gruppe insbesondere folgende Einrichtungen umfasst
      - eine Schraubeinrichtung,
      - eine Zugankereinrichtung,
      - eine Hakeneinrichtung,
      - eine Klippeinrichtung,
      - eine Sperrklinkeneinrichtung,
      - eine Bajonettverschlusseinrichtung,
      - eine Einrichtung mit Rastvorsprüngen,
      - eine Einrichtung mit Kugel- und Sperrabschnitten, insbesondere Kugelkalottenausnehmungen.
20. Werkzeugmaschinensystem mit einer Werkzeugmaschine gemäß mindestens einer der Ausführungsformen 1 bis 19 mit einer Werkzeugaufnahmeeinrichtung welche eine Werkzeugeinrichtung derart an der Werkzeugmaschine hält, dass die Abtriebsachse der Werkzeugmaschine und eine Werkzeug-Drehachse im Wesentlichen zusammenfallen.
21. Werkzeugmaschinensystem gemäß Ausführungsform 20, dadurch gekennzeichnet, dass die Halteeinrichtung wenigstens eine Wirkfläche zum Übertragen einer Kraftwirkung auf die Werkzeugeinrichtung aufweist und,
   dass auf der in Richtung der Abtriebsachse von der Werkzeugmaschine abgewandten Seite von einer Halteeinrichtungs-Begrenzungsfläche begrenzt ist und,
   dass die Werkzeugeinrichtung einen Werkzeuganschlussbereich und eine Werkzeug-Drehachse aufweist, wobei der Werkzeuganschlussbereich wenigstens eine Seitenwandung aufweist und sich in axialer Richtung zwischen einer ersten, und einer zweiten Orthogonalebene erstrecket, wobei diese Ebenen orthogonal zur Werkzeug-Drehachse angeordnet sind, wobei diese Seitenwandung von der Werkzeug-Drehachse radial beabstandet ist und eine axiale Erstreckung in der Richtung der Werkzeug-Drehachse aufweist und
   dass die Halteeinrichtung auf die Werkzeugeinrichtung im Bereich der Wirkfläche eine Kraftwirkung ausübt und,
   dass diese Kraftwirkung wenigstens eine Komponente in Richtung der Werkzeug-Drehachse aufweist.
22. Werkzeugmaschinensystem gemäß wenigstens einer der Ausführungsformen 20 bis 21, dadurch gekennzeichnet,
   dass die Halteeinrichtungs-Begrenzungsfläche und die Wirkfläche der Halteeinrichtung zwischen der ersten und der zweiten Orthogonalebene des Werkzeuganschlussbereichs liegen, wenn die Werkzeugeinrichtung an der Werkzeugmaschine befestigt ist, vorzugsweise im Bereich der axialen Erstreckung der Werkzeug-Antriebsflächenbereiche liegen.
23. Werkzeugmaschinensystem gemäß einer der Ausführungsformen 20 oder 22, dadurch gekennzeichnet,
   dass sich die Seitenwandung der Werkzeugeinrichtung in radialer Richtung wenigstens abschnittsweise zwischen einem ersten und einem zweiten radialen Abstand zu dieser Werkzeug-Drehachse erstreckt und
   dass wenigstens einer dieser Abschnitt zur Drehmomentübertragung von der Werkzeugmaschine auf die Werkzeugeinrichtung eingerichtet ist.
24. Werkzeugmaschinensystem gemäß einer der Ausführungsformen 20 bis 23, dadurch gekennzeichnet,
   dass die Seitenwandung der Werkzeugeinrichtung Werkzeug-Antriebsflächenbereiche aufweist und
   wenigstens abschnittsweise den konjugierten Verlauf zu diesen Abtriebsflächenbereichen des Drehmomentübertragungsbereichs aufweist und,
   dass diese Werkzeug-Antriebsflächenbereiche diese Abtriebsflächenbereiche vorzugsweise in Form einer Punktberührung, bevorzugt in Form einer Linienberührung und besonders bevorzugt in Form einer Flächenberührung wenigstens abschnittsweise kontaktieren.
25. Werkzeugeinrichtung mit einem Arbeitsbereich, welcher dazu eingerichtet ist auf ein Werkstück oder eine Werkstückanordnung einzuwirken und
   einem Werkzeug-Anschlussbereich, welcher zur Aufnahme von Antriebskräften eingerichtet ist, und
   einem Werkzeug-Verbindungsbereich, welcher dazu eingerichtet ist die Antriebskräfte zu diesem Arbeitsbereich zu übertragen,
   zur Verwendung mit einer Werkzeugmaschine gemäß einer der Ausführungsformen 1 bis 19.

**Bezugszeichenliste:**

| | |
|---|---|
| 1 | Werkzeugaufnahmeeinrichtung einer handgeführten Werkzeugmaschine |
| 2 | Abtriebsachse |
| 3 | Spanneinrichtung |
| 3a | Spannkraft |
| 4 | Halteeinrichtung |
| 4a | Erste Hakeneinrichtung |
| 4b | Zweite Hakeneinrichtung |
| 4c | Haltefläche |
| 4d | Hakendrehpunkt |
| 4g | Halteeinrichtungs-Begrenzungsfläche |
| 4h | Haltekraftwirkung |
| 5e | Führungsausnehmung |
| 6 | Bewegungselement |
| 8 | Werkzeugeinrichtung |
| 8a | Werkzeug-Anschlussbereich |
| 8b | Werkzeug-Drehachse |
| 8c | Erste Orthogonalebene |
| 8d | Zweite Orthogonalebene |
| 8e | Werkzeug-Kodierungseinrichtung |
| 8f | Werkzeug-Antriebsflächenbereich |
| 8g | Axiale Erstreckung des Werkzeug-Antriebsflächenbereichs |
| 8h | Werkzeug-Flächenpunkt |
| 8i | Werkzeug-Seitenwandung |
| 8j | Arbeitsbereich |
| 8k | Werkzeug-Verbindungsbereich |
| 9 | Drehmomentübertragungsbereich |
| 9a | Abtriebsflächenbereich |
| 9b | Flächenpunkt |
| 9c | Verbindungsbereich |
| 9d | Befestigungsschraube |
| 9e | Unterlegscheibe |
| 9f | Mutternteil |
| 9g | Zugankereinrichtung |
| 9h | Übergangsbereich (zwischen zwei Abtriebsflächenbereichen angeordnet) |
| 9i | Werkzeugmaschinen-Deckflächenabschnitt |
| 13 | obere Begrenzungsebene |
| 14 | Untere Begrenzungsebene |
| 15 | Axialebene |
| 16 | Radialebene |
| 17 | Tangentialebene |
| 18 | Flächennormale auf einen Abtriebsflächenbereich |
| 19 | Kodierungseinrichtung |
| 19a | Erhabene Kodierungseinrichtung |
| 19b | Kodierungseinrichtung mit Ausnehmung |
| 20a | Punktförmiger Berührbereich |
| 20b | Linienförmiger Berührbereich |
| 20c | Flächenförmiger Berührbereich |
| 21 | Berührlinie zwischen Werkzeug-Antriebsflächenbereich und Abtriebsflächenbereich |
| 22 | Werkzeugmaschine |
| 22a | Abtriebsspindel |
| 22b | Betätigungshebel |
| 25 | Referenzdurchmesser für Drehmomentübertragungsbereich |
| α | erster Winkel |
| β | zweiter Winkel |
| r₁ | erster Abstand Werkzeug-Seitenwandung zu Werkzeug-Drehachse |
| r₂ | zweiter Abstand Werkzeug-Seitenwandung zu Werkzeug-Drehachse |
| R_{I} | erster Krümmungsradius eines Abtriebsflächenbereichs |
| R_{Ia} | Variabler Krümmungsradius eines Abtriebsflächenbereichs |
| R_{II} | Zweiter Krümmungsradius eines Abtriebsflächenbereichs |
| a | Gerade verlaufende Gitternetzlinie eines Abtriebsflächenbereichs |
| b_{I} | Erste gekrümmte Gitternetzlinie eines Abtriebsflächenbereichs |
| b_{II} | Zweite gekrümmte Gitternetzlinie eines Abtriebsflächenbereichs |
| b_{Ia} | Dritte Gitternetzlinie mit variabler Krümmung eines Abtriebsflächenbereichs |
| k1 | Schlüsselweite, Abstand paralleler Abtriebsflächenteilbereiche |
| k2 | erster Innendurchmesser |
| k3 | zweiter Innendurchmesser |
| k10 | Durchmesser der Ausnehmung im Werkzeugmaschinen-Deckflächenabschnitt |
| k11 | Tiefe des Drehmomentübertragungsbereichs |
| k12 | Polygonwinkel |
| k13 | Winkel zwischen Abtriebsflächenbereich und Parallele zur Abtriebsachse |
| k14 | Geradliniger Verlauf des Abtriebsflächenbereichs |

## Patentansprüche

1. Werkzeugmaschine, insbesondere handgeführte Werkzeugmaschine, die eine um eine Abtriebsachse bewegbare, insbesondere oszillierend bewegbare, Werkzeugaufnahmeeinrichtung aufweist,
wobei diese Werkzeugaufnahmeeinrichtung dazu eingerichtet ist, eine Werkzeugeinrichtung derart an der Werkzeugmaschine zu halten, dass die Abtriebsachse und eine Werkzeug-Drehachse im Wesentlichen zusammenfallen,
wobei die Werkzeugaufnahmeeinrichtung wenigstens einen Drehmomentübertragungsbereich und eine Halteeinrichtung aufweist,
wobei dieser Drehmomentübertragungsbereich zur Übertragung einer Antriebskraft auf die Werkzeugeinrichtung wenigstens zwei im Abstand zu dieser Abtriebsachse angeordnete Abtriebsflächenbereiche mit je einer Vielzahl von Flächenpunkten aufweist,
wobei Tangentialebenen an diesen Flächenpunkten gegenüber einer Axialebene, welche diese Abtriebsachse einschließt, geneigt sind,
wobei diese Tangentialebenen gegenüber einer Radialebene, welche sich senkrecht zu der Abtriebsachse erstreckt, geneigt sind,
wobei eine Normale auf eine dieser Tangentialebenen in radialer Richtung zu der Abtriebsachse hin orientiert ist, vorzugsweise alle Normalen dieser Tangentialebenen in radialer Richtung zu der Abtriebsachse hin orientiert sind, und
wobei die Abtriebsflächenbereiche im Wesentlichen sternartig so um die Abtriebsachse angeordnet sind, dass durch die Abtriebsflächenbereiche wenigstens abschnittsweise eine dreidimensionale Ausnehmung beschrieben wird, die geschnitten mit einer zur Abtriebsachse orthogonalen Ebene im Wesentlichen die Grundfläche eines sternförmigen Polygons aufweist.

2. Werkzeugmaschine nach Anspruch 1, wobei das sternförmige Polygon abgerundete Ecken zwischen jeweils zwei Abtriebsflächenbereichen aufweist,
wobei die abgerundeten Ecken vorzugsweise einen variablen oder konstanten Radius aus einem Bereich zwischen 0,25 mm und 10 mm, bevorzugt zwischen 1 und 5 und besonders bevorzugt zwischen 2,5 mm und 4 mm aufweisen.

3. Werkzeugmaschine gemäß Anspruch 1 oder 2, **dadurch gekennzeichnet,**
**dass** wenigstens einer, bevorzugt eine Vielzahl und besonderes bevorzugt alle dieser Abtriebsflächenbereiche wenigstens abschnittsweis im Wesentlichen eben sind, oder
**dass** wenigstens einer, vorzugsweise eine Vielzahl und bevorzugt alle diese Abtriebsflächenbereiche wenigstens abschnittsweise gekrümmt sind.

4. Werkzeugmaschine gemäß einem der vorhergehenden Ansprüche, **dadurch gekennzeichnet,**
**dass** dieser Drehmomentübertragungsbereich wenigstens eine erste obere Begrenzungsebene und wenigstens eine zweite untere Begrenzungsebene aufweist,
**dass** diese Begrenzungsebenen im Wesentlichen senkrecht zu dieser Abtriebsachse angeordnet sind,
**dass** diese Begrenzungsebenen voneinander beabstandet sind und,
**dass** jeder dieser Abtriebsflächenbereiche zwischen einer dieser ersten oberen und einer dieser zweiten unteren Begrenzungsebene angeordnet ist,
und vorzugsweise
**dass** sich eine Vielzahl, vorzugsweise alle, dieser Abtriebsflächenbereiche zwischen einer einzigen ersten oberen und einer einzigen zweiten unteren Begrenzungsebene erstrecken.

5. Werkzeugmaschine gemäß einem der vorhergehenden Ansprüche, **dadurch gekennzeichnet,**
A) **dass** dieser Drehmomentübertragungsbereich eine Vielzahl von Abtriebsflächenbereichen aufweist, welche rotationssymmetrisch um die Abtriebsachse angeordnet sind,
und/oder
B) **dass** wenigstens jeweils zwei, vorzugsweise mehrere, dieser Abtriebsflächenbereiche symmetrisch zu einer Symmetrieebene angeordnet sind,
**dass** in dieser Symmetrieebene die Abtriebsachse liegt und,
**dass** weiter vorzugsweise diese Abtriebsflächenbereiche im Wesentlichen aneinanderstoßend angeordnet sind.

6. Werkzeugmaschine gemäß einem der vorhergehenden Ansprüche, **dadurch gekennzeichnet,**
**dass** dieser Drehmomentübertragungsbereich eine Seitenwandung aufweist,
**dass** diese Seitenwandung radial beabstandet von der Abtriebsachse verläuft, und
**dass** diese Seitenwandung die Abtriebsflächenbereiche aufweist,
und vorzugsweise
**dass** die Seitenwandung im Wesentlichen radial geschlossen um die Abtriebsachse umläuft.

7. Werkzeugmaschine gemäß einem der vorhergehenden Ansprüche, **dadurch gekennzeichnet,**
A) **dass** zwischen einer dieser Tangentialebenen und dieser Radialebene, wobei diese Radialebene senkrecht zur Abtriebsachse angeordnet ist, der Winkel α eingeschlossen ist,
**dass** der Winkel α vorzugsweise kleiner als 90°, bevorzugt kleiner als 80° und besonders bevorzugt kleiner als 75° ist,
weiter vorzugsweise ist der Winkel α größer als 0°, bevorzugt größer als 45° und besonders bevorzugt größer als 60°,
weiter vorzugsweise liegt der Winkel α in einem Bereich von 62,5° bis 72,5°, und/oder
B) **dass** zwischen einer dieser Tangentialebenen und dieser Axialebene, wobei in dieser Axialebene die Abtriebsachse liegt, der Winkel β eingeschlossen ist, dass der Winkel β vorzugsweise kleiner als 90°, bevorzugt kleiner als 70° und
besonders bevorzugt kleiner als 65° ist und
weiter vorzugsweise ist der Winkel β größer als 0°, bevorzugt größer als 15° und besonders bevorzugt größer als 30°,
weiter vorzugsweise ist der Winkel β im Wesentlichen 30°, 45° oder 60°.

8. Werkzeugmaschine gemäß einem der vorhergehenden Ansprüche, **dadurch gekennzeichnet,**
A) **dass** dieser Drehmomentübertragungsbereich eine gerade Anzahl von Abtriebsflächenbereichen aufweist, vorzugsweise 4 oder mehr, bevorzugt 8 oder mehr und besonders bevorzugt 16 oder mehr und,
weiter vorzugsweise 64 oder weniger, bevorzugt 48 oder weniger und besonders bevorzugt 32 oder weniger,
und/oder
B) **dass** das sternförmige Polygon 4, 6, 8 oder 10 oder ganz besonders bevorzugt 12 oder weiter vorzugsweise 14, 16, 18 oder 20 Ecken aufweist.

9. Werkzeugmaschine gemäß einem der vorhergehenden Ansprüche,
**dadurch gekennzeichnet,**
A) **dass** die Werkzeugmaschine eine Kodierungseinrichtung aufweist,
**dass** diese Kodierungseinrichtung wenigstens eine erste Querschnittsfläche aufweist,
**dass** diese Kodierungseinrichtung eine erste Erstreckung im Wesentlichen in senkrechter Richtung zu dieser Querschnittsfläche aufweist, vorzugsweise ist diese erste Erstreckung in Richtung dieser Abtriebsachse gerichtet,
und vorzugsweise
B) **dass** eine dieser Kodierungseinrichtungen oder mehrere dieser Kodierungseinrichtungen rotationssymmetrisch zu dieser Abtriebsachse angeordnet sind,
oder
C) **dass** die Form wenigstens einer, vorzugsweise aller, Kodierungseinrichtungen aus einer Gruppe von Formen ausgewählt ist, welche wenigstens:
- ein Polygon mit einer Vielzahl von Ecken, vorzugsweise 3, 4, 5, 6, 7, 8 oder mehr,
- einen Kreis,
- eine Ellipse,
- einen Bogen mit einem variablen oder konstanten Radius oder
- eine Kombination aus mehreren dieser Formen
umfasst.

10. Werkzeugmaschine gemäß einem der vorhergehenden Ansprüche, **dadurch gekennzeichnet**,
diese Halteeinrichtung wenigstens eine, aus einer Gruppe von Einrichtungen ausgewählte Einrichtung aufweist oder eine Kombination aus mehreren dieser Einrichtungen und,
dass diese Gruppe insbesondere folgende Einrichtungen umfasst
- eine Schraubeinrichtung,
- eine Zugankereinrichtung,
- eine Hakeneinrichtung,
- eine Klippeinrichtung,
- eine Sperrklinkeneinrichtung,
- eine Bajonettverschlusseinrichtung,
- eine Einrichtung mit Rastvorsprüngen,
- eine Einrichtung mit Kugel- und Sperrabschnitten, insbesondere Kugelkalottenausnehmungen.

11. Werkzeugmaschinensystem mit einer Werkzeugmaschine gemäß einem der Ansprüche 1 bis 10 mit einer Werkzeugaufnahmeeinrichtung, welche eine Werkzeugeinrichtung derart an der Werkzeugmaschine hält, dass die Abtriebsachse der Werkzeugmaschine und eine Werkzeug-Drehachse im Wesentlichen zusammenfallen.

12. Werkzeugmaschinensystem gemäß Anspruch 11, **dadurch gekennzeichnet, dass** die Halteeinrichtung wenigstens eine Wirkfläche zum Übertragen einer Kraftwirkung auf die Werkzeugeinrichtung aufweist und,
dass auf der in Richtung der Abtriebsachse von der Werkzeugmaschine abgewandten Seite von einer Halteeinrichtungs-Begrenzungsfläche begrenzt ist und, dass die Werkzeugeinrichtung einen Werkzeuganschlussbereich und eine Werkzeug-Drehachse aufweist, wobei der Werkzeuganschlussbereich wenigstens eine Seitenwandung aufweist und sich in axialer Richtung zwischen einer ersten, und einer zweiten Orthogonalebene erstrecket, wobei diese Ebenen orthogonal zur Werkzeug-Drehachse angeordnet sind, wobei diese Seitenwandung von der Werkzeug-Drehachse radial beabstandet ist und eine axiale Erstreckung in der Richtung der Werkzeug-Drehachse aufweist und
dass die Halteeinrichtung auf die Werkzeugeinrichtung im Bereich der Wirkfläche eine Kraftwirkung ausübt und,
dass diese Kraftwirkung wenigstens eine Komponente in Richtung der Werkzeug-Drehachse aufweist.

13. Werkzeugmaschinensystem gemäß einem der Ansprüche 11 bis 12, **dadurch gekennzeichnet,**
**dass** die Halteeinrichtungs-Begrenzungsfläche und die Wirkfläche der Halteeinrichtung zwischen der ersten und der zweiten Orthogonalebene des Werkzeuganschlussbereichs liegen, wenn die Werkzeugeinrichtung an der Werkzeugmaschine befestigt ist, vorzugsweise im Bereich der axialen Erstreckung der Werkzeug-Antriebsflächenbereiche liegen.

14. Werkzeugmaschinensystem gemäß einem der Ansprüche 11 bis 13, **dadurch gekennzeichnet,**
A) **dass** sich die Seitenwandung der Werkzeugeinrichtung in radialer Richtung wenigstens abschnittsweise zwischen einem ersten und einem zweiten radialen Abstand zu dieser Werkzeug-Drehachse erstreckt und
**dass** wenigstens einer dieser Abschnitte zur Drehmomentübertragung von der Werkzeugmaschine auf die Werkzeugeinrichtung eingerichtet ist,
und/oder
B) **dass** die Seitenwandung der Werkzeugeinrichtung Werkzeug-Antriebsflächenbereiche aufweist und
wenigstens abschnittsweise den konjugierten Verlauf zu diesen Abtriebsflächenbereichen des Drehmomentübertragungsbereichs aufweist und,
**dass** diese Werkzeug-Antriebsflächenbereiche diese Abtriebsflächenbereiche vorzugsweise in Form einer Punktberührung, bevorzugt in Form einer Linienberührung und besonders bevorzugt in Form einer Flächenberührung wenigstens abschnittsweise kontaktieren.

15. Werkzeugeinrichtung mit einem Arbeitsbereich, welcher dazu eingerichtet ist, auf ein Werkstück oder eine Werkstückanordnung einzuwirken und
einem Werkzeug-Anschlussbereich, welcher zur Aufnahme von Antriebskräften eingerichtet ist, und
einem Werkzeug-Verbindungsbereich, welcher dazu eingerichtet ist, die Antriebskräfte zu diesem Arbeitsbereich zu übertragen,
zur Verwendung mit einer Werkzeugmaschine gemäß einem der Ansprüche 1 bis 10.
